# EUROPEAN PATENT SPECIFICATION

(11) **EP 3 376 710 B1**
(45) Date of publication and mention of the grant of the patent: **31.07.2019**
(21) Application number: 18158923.5
(22) Date of filing: 27.02.2018
(51) Int. Cl.: H04L 12/18

(54) **COMMUNICATION TERMINAL, COMMUNICATION SYSTEM, COMMUNICATION METHOD, AND CARRIER MEANS**
KOMMUNIKATIONSENDGERÄT, KOMMUNIKATIONSSYSTEM, KOMMUNIKATIONSVERFAHREN UND TRÄGERMEDIEN
SYSTÈME, PROCÉDÉ ET TERMINAL DE COMMUNICATION ET MOYENS DE SUPPORT

(30) Priority: 28.02.2017 JP 2017037238; 13.02.2018 JP 2018023173
(43) Date of publication of application: 19.09.2018
(73) Proprietor: Ricoh Company, Ltd., Tokyo 143-8555 (JP)
(72) Inventor: WATANABE, Ayako, Tokyo, 143-8555 (JP); KATO, Yoshinaga, Tokyo, 143-8555 (JP); KAJI, Katsuyuki, Tokyo, 143-8555 (JP)
(74) Representative: SSM Sandmair

(56) References cited:
- EP-A1- 3 076 590
- US-A1- 2004 128 354
- US-A1- 2015 327 070

## Description

### BACKGROUND

### Technical Field

Embodiments of the present disclosure relate to a communication terminal, a communication system, a communication method, and carrier means.

### Related Art

In recent years, electronic whiteboards are disposed in various places such as meeting rooms in companies and classrooms in educational institutions and each electronic whiteboard is shared by a plurality of users. The electronic whiteboard is provided with a touch panel display of large size, which displays an image drawn by a user with an electronic pen or his or her finger. Image data of an image drawn on one of the electronic whiteboards by the user is transmitted to the other electronic whiteboard(s) to display the same image so that the users participating in a conference or a class are able to share the same image (JP-2012-212008-A).

Further, with an increased need for reducing business trip costs and time in recent years, videoconference systems are now widely used. A plurality of videoconference terminals each of which transmits and receives image data and audio data in the videoconference system enables users to participate in, for example, a teleconference and a class remotely held (JP-2012-178135-A).

US 2004/128354 A1 provides a teleconference system for making it possible to connect a plurality of sites and realize remote cooperative work.

EP 3 076 590 A1 relates to a communication system in which a communication terminal simplifies a process to start communication with a first communication terminal, even when the communication terminal lists a plurality of candidate counterpart communication terminals in the contact list, or even when the first communication terminal is not registered in the contact list.

### SUMMARY

Example embodiments of the present disclosure include a communication terminal (2) includes a processor (201) configured to control the communication terminal to perform a first function and a second function. The first function is performed without requiring communication with other communication terminal. The second function is performed through communication with the other communication terminal. The processor (201) is configured to control to transmit first authentication information to a first server to request for the first function, the first server being configured to perform a first authentication process of determining whether the communication terminal is allowed to perform the first function based on the first authentication information. In response to a result of the first authentication process indicating that the communication terminal is allowed to perform the first function, the processor (201) controls to transmit second authentication information to a second server to request for the second function. The second server is configured to perform a second authentication process of determining whether the communication terminal is allowed to perform the second function based on the second authentication information.

The second authentication information is received from a third server that transmits the second authentication information based on the result of the first authentication process indicating that the communication terminal is allowed, the result of the first authentication process including user identification information that is included in a request for the second authentication information transmitted by the communication terminal to the third server.

The example embodiments of the present disclosure further include a method performed by the communication terminal (2), a system including the communication terminal (2), and carrier means carrying a computer readable code for controlling a computer to carry out the method performed by the communication terminal (2).

According to one or more of the embodiments of the disclosure, in performing such plurality of functions, the security is ensured according to each of the plurality of functions by performing a login authentication process for each of the plurality of functions.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic diagram illustrating a communication system according to one of the embodiments of the disclosure;
FIG. 2 is a schematic block diagram illustrating a hardware configuration of an electronic whiteboard, according to one of the embodiments;
FIG. 3 is a schematic block diagram illustrating a hardware configuration of an integrated circuit (IC) card, according to one of the embodiments;
FIG. 4 is a schematic block diagram illustrating a hardware configuration of a smartphone, according to one of the embodiments;
FIG. 5 is a schematic block diagram illustrating a hardware configuration of a sever or a personal computer (PC), according to one of the embodiments;
FIG. 6 is a schematic block diagram illustrating a hardware configuration of a multifunctional peripheral product (MFP), according to one of the embodiments;
FIG. 7 is a schematic block diagram illustrating a hardware configuration of a videoconference terminal, according to one of the embodiments;
FIGs. 8A, 8B, and 8C are illustrations each of which illustrates an example screen displayed with a display of the electronic whiteboard;
FIGs. 9A and 9B are a schematic block diagram illustrating a functional configuration of the communication system, according to one of the embodiments;
FIG. 10A is a conceptual diagram illustrating a privately-owned terminal management table, according to one of the embodiments;
FIG. 10B is a conceptual diagram illustrating a shared terminal management table, according to one of the embodiments;
FIG. 11 is a conceptual diagram illustrating an authentication management table, according to one of the embodiments;
FIG. 12 is a conceptual diagram illustrating an operating state management table, according to one of the embodiments;
FIG. 13 is a conceptual diagram illustrating a destination list management table, according to one of the embodiments;
FIG. 14 is a sequence diagram illustrating a login process of logging into the privately-owned terminal management server;
FIGs. 15A, to 15D are illustrations each of which illustrates an example screen displayed with a display of the electronic whiteboard;
FIG. 16 is an illustration for explaining a use scenario of the electronic whiteboard, according to an embodiment;
FIG. 17 is a flowchart illustrating a process of determining whether a login authentication process is set, according to an embodiment;
FIG. 18 is a flowchart illustrating a process according to an authentication result in logging into the communication management server, according to an embodiment;
FIG. 19 is a sequence diagram illustrating a login process of logging into the communication management server for starting a videoconference, according to an embodiment;
FIG. 20 is an illustration of an example of a destination list;
FIG. 21 is a sequence diagram illustrating an operation of starting video communication according to an embodiment; and
FIG. 22 is a sequence diagram illustrating a communication process in relation to image data, according to another embodiment.

The accompanying drawings are intended to depict example embodiments of the present disclosure and should not be interpreted to limit the scope thereof. The accompanying drawings are not to be considered as drawn to scale unless explicitly noted.

### DETAILED DESCRIPTION

The terminology used herein is for describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof. In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operation in a similar manner, and achieve a similar result.

Referring to the drawings, a communication system 1 according to one of the embodiment is described in detail.

### <Overview of system configuration>

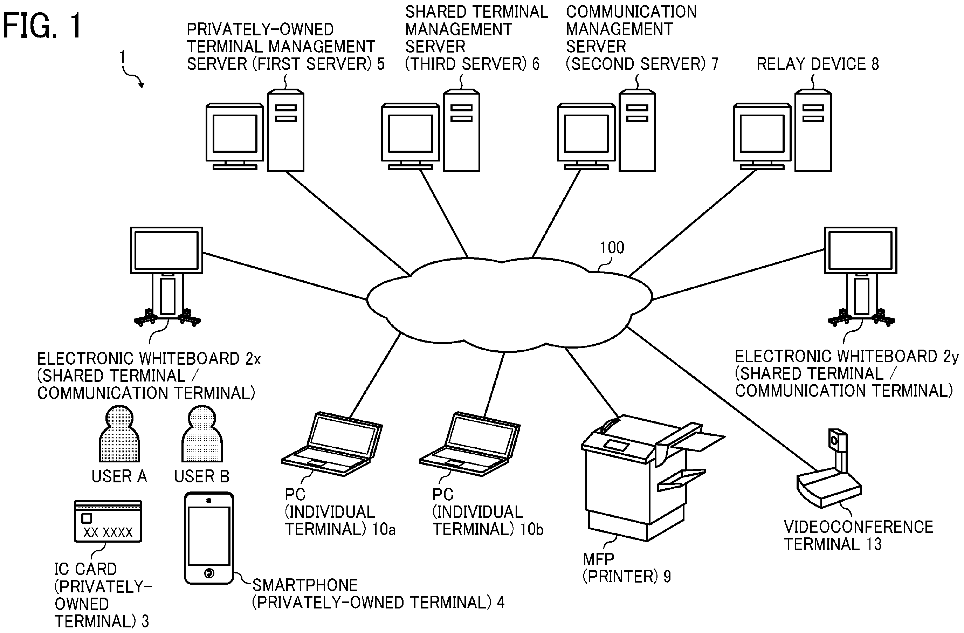

A description is given of an overview of a configuration of the communication system 1. FIG. 1 is a schematic diagram illustrating the configuration of the communication system 1 according to the embodiment.

As illustrated in FIG. 1, the communication system 1 according to the embodiment includes an electronic whiteboard (shred terminal/communication terminal) 2x, an electronic whiteboard (shred terminal/communication terminal) 2y, an integrated circuit (IC) card (privately-owned terminal) 3, a smartphone (privately-owned terminal) 4, a privately-owned terminal management server (first server) 5, a shared terminal management server (second server) 6, a communication management server (third server) 7, a relay device 8, a multifunction peripheral, product or printer (MFP) 9, personal computers (PCs) 10a and 10b, and a videoconference terminal 13. For simplicity, in the following description, any arbitrary one of the electronic whiteboards 2x and 2y is referred to as the "electronic whiteboard 2". Additionally, any arbitrary one of the PCs 10a and 10b is referred to as the "PC 10".

The electronic whiteboard 2, the privately-owned terminal management server 5, the shared terminal management server 6, the communication management server 7, the relay device 8, the MFP 9, the PC 10, and the videoconference terminal 13, which are included in the communication system 1, are communicable with one another through a communication network 100. The communication network 100 is implemented, for example, by the Internet, a mobile communication network, and a local area network (LAN). The communication network 100 may include, in addition to a wired network, a wireless network in compliance with, for example, 3rd Generation (3G), Worldwide Interoperability for Microwave Access (WiMAX), and Long Term Evolution (LTE). The electronic whiteboard 2, IC card 3, and smartphone 4 are communicable with one another using a near-distance communication technology in compliance with such as Near Field Communication (NFC)

### (Registered Trademark).

The smartphone 4 may communicate with the electronic whiteboard 2 using a near-distance communication technology in compliance with such as Bluetooth (Registered Trademark).

Each of the electronic whiteboard 2x and the electronic whiteboard 2y transmits and receives image data representing content that is drawn by a user (hereinafter referred to as "drawing image data") to and from the other. For example, content drawn with the electronic whiteboard 2x is also displayed with the electronic whiteboard 2y. Similarly, content drawn with the electronic whiteboard 2y is also displayed with the electronic whiteboard 2x.

The electronic whiteboard 2 generates image data in a Refined Printing Command Stream (RPCS) format based on the drawing image data, and transmits the generated image data to the MFP 9 through the communication network 100. Additionally, the electronic whiteboard 2 generates image data in a Portable Document Format (PDF) based on the drawing image data, and transmits the generated image data by attaching to an electronic mail (E-mail) and sending the E-mail to the PC 10 through the communication network 100. The PC 10 displays an image of the drawing image data (hereinafter referred to as a "drawing image") based on the image data extracted from the E-mail.

The electronic whiteboard 2 also displays an image other than the drawing image drawn by the user (hereinafter referred to as a "non-drawing image"), including, for example, an image of a presentation material and an image of a background displayed with the electronic whiteboard 2. The electronic whiteboard 2 generates image data of the non-drawing image (hereinafter referred to as "non-drawing image data") in an RPCS format based on the non-drawing image data, and transmits the generated image data to the MFP 9 through the communication network 100. Additionally, the electronic whiteboard 2 generates image data in a PDF based on the non-drawing image data, and transmits the generated image data by attaching to an E-mail and sending the E-mail to the PC 10 through the communication network 100.

In this embodiment, each of the image data in an RPCS format and the image data in a PDF format is related to an original image of the drawing image or the non-drawing image. The electronic whiteboard 2 is an example of a shared terminal to be shared by a plurality of users so that the plurality of users views the same image simultaneously. Each of the IC card 3 and the smartphone 4 is an example of a privately-owned terminal that is privately owned by each user. The MFP 9 is an example of a printer. The PC 10 is an example of an individual terminal that is operated by an individual user. The image data may be in any suitable format other than an RPCS format, and in some of the embodiments, the image data is generated in a Printer Control Language (PCL) format, a Page Description Language (PDL) format, or a Post Script (PS) format.

In FIG. 1, a user A, who owns the IC card 3, participates in a conference held by using the electronic whiteboard 2 with the IC card 3. Similarly, a user B, who owns the smartphone 4, participates in a conference held by using the electronic whiteboard 2 with the smartphone 4. The PC 10a is a PC that is owned by the user A. The PC 10b is a PC that is owned by the user B. Additionally, the electronic whiteboard 2 has a function of a video call, which may be, hereinafter, referred to as video communication. With the video call function, the electronic whiteboard 2 communicates with the videoconference terminal 13, more specifically, the electronic whiteboard 2 transmits and receives video data and audio data to and from the videoconference terminal 13 through the communication network 100 to proceed the videoconference.

The privately-owned terminal management server 5 manages, for each privately-owned terminal, a terminal identification (ID) identifying each privately-owned terminal. The terminal ID of a privately-owned terminal may be, hereinafter, referred to as a "privately-owned terminal ID". The shared terminal management server 6 manages an email address of each PC 10 owned by corresponding one of the user. The communication management server 7 manages communication when a video communication is established among a plurality of shared terminals including the electronic whiteboards 2. The relay device 8 relays image data and audio data among a plurality of shared terminals including the electronic whiteboards 2.

### <Hardware Configuration>

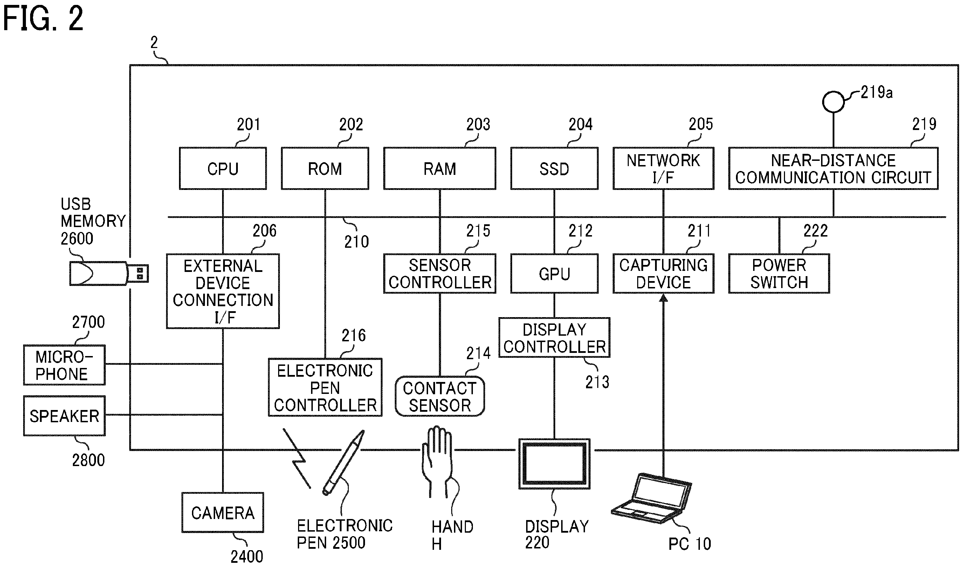

Referring to FIGs. 2 to 7, a hardware configuration of each server, device, and terminal in the communication system 1 is described according to the embodiment.

### <Hardware Configuration of Electronic Whiteboard>

FIG. 2 is a diagram illustrating a hardware configuration of the electronic whiteboard 2 according to the embodiment. As illustrated in FIG. 2, the electronic whiteboard 2 includes a central processing unit (CPU) 201, a read only memory (ROM) 202, a random access memory (RAM) 203, a solid state drive (SSD) 204, a network interface (I/F) 205, and an external device connection interface (I/F) 206.

The CPU 201 controls the entire operation of the electronic whiteboard 2. The ROM 202 stores a control program for operating the CPU 201 such as an Initial Program Loader (IPL). The RAM 203 is used as a work area for the CPU 201. The SSD 204 stores various data such as the control program for the electronic whiteboard 2. The network I/F 205 controls communication with an external device through the communication network 100. The external device connection I/F 206 controls communication with a Universal Serial Bus (USB) memory 2600, and external devices including a camera 2400, a speaker 2800, and a microphone 2700.

The electronic whiteboard 2 further includes a capturing device 211, a graphics processing unit (GPU) 212, a display controller 213, a contact sensor 214, a sensor controller 215, an electronic pen controller 216, a near-distance communication circuit 219, an antenna 219a for the near-distance communication circuit 219, and a power switch 222.

The capturing device 211 causes a display 508 of the PC 10 to display a still image or a video image based on image data. The capturing device 211 is connected to the PC 10 by a cable. This cable may be a cable for analog Red-Green-Blue (RGB) (video graphics array (VGA)) signal, a cable for component video, or a cable for a high-definition multimedia interface (HDMI) (registered trademark), a digital video interactive (DVI), a universal serial bus (USB), or a display port. The GPU 212 is a semiconductor chip dedicated to process a graphical image. The display controller 213 outputs an image processed with the GPU 212 to a display 220, for example. The contact sensor 214 detects a touch onto the display 220 with an electronic pen 2500 or a user's hand H. The sensor controller 215 controls the contact sensor 214. The contact sensor 214 senses a touch input to a specific coordinate on the display 220 using the infrared blocking system. More specifically, the display 220 is provided with two light receiving elements disposed on both upper side ends of the display 220, and a reflector frame disposed at the sides of the display 220. The light receiving elements emit a plurality of infrared rays in parallel to a surface of the display 220. The light receiving elements receive lights passing in the direction that is the same as an optical path of the emitted infrared rays, which are reflected by the reflector frame. The contact sensor 214 outputs an identifier (ID) of the infrared ray that is blocked by an object after being emitted from the light receiving elements, to the sensor controller 215. Based on the ID of the infrared ray, the sensor controller 215 detects a specific coordinate that is touched by the object. The electronic pen controller 216 communicates with the electronic pen 2500 to detect a touch by the tip or bottom of the electronic pen 2500 to the display 220.

The near-distance communication circuit 219 is a communication circuit that communicates in compliance with, for example, an NFC or the Bluetooth. The power switch 222 is a switch for turning on or off the power of the electronic whiteboard 2.

The electronic whiteboard 2 further includes a bus line 210. The bus line 210 is an address bus or a data bus that electrically connects the elements in FIG. 2, such as the CPU 201, to each other.

The contact sensor 214 is not limited to the infrared blocking system type, and may be a different type of detector, such as a capacitance touch panel that identifies the contact position by detecting a change in capacitance, a resistance film touch panel that identifies the contact position by detecting a change in voltage of two opposed resistance films, or an electromagnetic induction touch panel that identifies the contact position by detecting electromagnetic induction caused by contact of an object to a display. In addition or in alternative to detecting a touch by the tip or bottom of the electronic pen 2500, the electronic pen controller 216 may also detect a touch by another part of the electronic pen 2500, such as a part held by a hand of the user.

### <Hardware Configuration of IC Card>

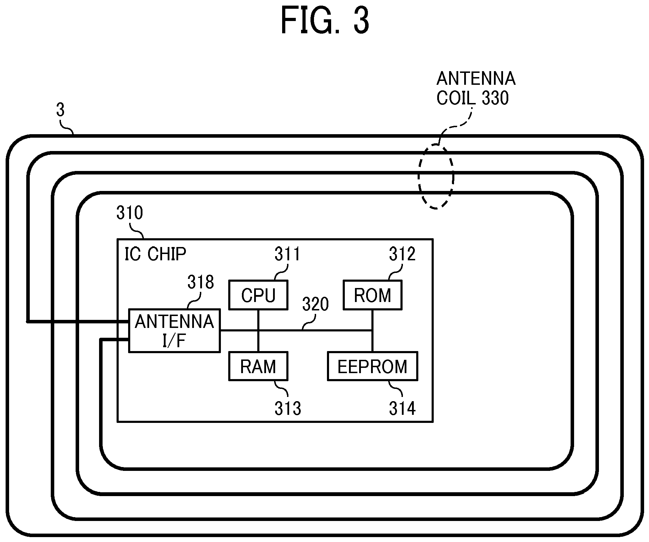

FIG. 3 is a diagram illustrating a hardware configuration of the IC card 3 according to the embodiment. In this embodiment, a contactless IC card is used to describe the IC card 3. In some of the embodiments, a contact IC card is used as the IC card 3. As illustrated in FIG. 3, the IC card 3 includes an IC chip 310 and an antenna coil 330. The IC chip 310 further includes a CPU 311, a ROM 312, a RAM 313, an Electrically Erasable and Programmable ROM (EEPROM) 314, and an antenna I/F 318.

The CPU 311 controls the entire operation of the IC card 3. The ROM 312 stores a control program for operating the CPU 311. The RAM 313 is used as a work area for the CPU 311. The EEPROM 314 stores various data including the control program for the IC card 3, and a privately-owned terminal ID for identifying the IC card 3. The antenna I/F 318 transmits and receives data to and from an external device via the antenna coil 330.

The IC card 3 further includes a bus line 320. The bus line 320 is an address bus or a data bus that electrically connects the elements in FIG. 3, such as the CPU 311, to each other.

The antenna coil 330 generates an electric current by receiving magnetism, when the IC card 3 passes an electromagnetic field generated by radio waves emitted from an external device such as a reader and a writer. The IC card 3 uses the generated electric current to activate the IC chip 310, and communicates with the external device, such as a reader or a writer, to obtain and provide data from and to the external device.

### <Hardware Configuration of Smartphone>

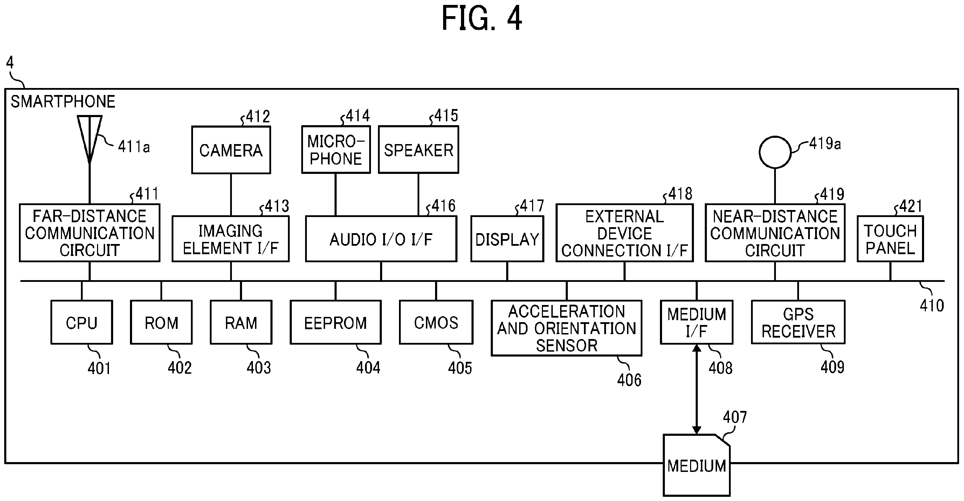

FIG. 4 is a diagram illustrating a hardware configuration of the smartphone 4 according to the embodiment. As illustrated in FIG. 4, the smartphone 4 includes a CPU 401, a ROM 402, a RAM 403, an EEPROM 404, a Complementary Metal Oxide Semiconductor (CMOS) sensor 405, an acceleration and orientation sensor 406, a medium I/F 408, and a global positioning system (GPS) receiver 409.

The CPU 401 controls the entire operation of the smartphone 4. The ROM 402 stores a control program for operating the CPU 401 such as an IPL. The RAM 403 is used as a work area for the CPU 401. The EEPROM 404 reads and writes various data such as a control program for the smartphone 4 under control of the CPU 401. The CMOS sensor 405 captures an object, which is mainly, a user who is operating the smartphone 4, under control of the CPU 401 to obtain captured image data. The acceleration and orientation sensor 406 includes various sensors such as an electromagnetic compass and gyrocompass, each of which detects geomagnetism, and an acceleration sensor. The medium I/F 408 controls reading or writing of data with respect to a recording medium 407 such as a flash memory. The GPS receiver 409 receives a GPS signal from a GPS satellite.

The smartphone 4 further includes a far-distance communication circuit 411, a camera 412, an imaging element I/F 413, a microphone 414, a speaker 415, an audio input/output (I/O) I/F 416, a display 417, an external device connection I/F 418, a near-distance communication circuit 419, an antenna 419a for the near-distance communication circuit 419, and a touch panel 421.

The far-distance communication circuit 411 is a circuit that communicates with other device through the communication network 100. The camera 412 is an example of an imaging device capable of capturing a subject to obtain image data under control of the CPU 401, and is incorporated in the smartphone 4. The imaging element I/F 413 is a circuit that controls driving of the camera 412. The microphone 414 is an example of audio collecting device capable of inputting audio under control of the CPU 401, and is incorporated in the smartphone 4. The audio I/O I/F 416 is a circuit for inputting and outputting an audio signal between the microphone 414 and the speaker 415 under control of the CPU 401. The display 417 includes a liquid crystal or organic electro luminescence (EL) display that displays an image of a subject, an operation icon, or the like. The external device connection I/F 418 is an interface circuit that connects the smartphone 4 to various external devices.

The near-distance communication circuit 419 is a communication circuit that communicates in compliance with, for example, an NFC or the Bluetooth. The touch panel 421 is an example of an input device that enables the user to input a user instruction to the smartphone 4 by touching a screen of the display 417.

The smartphone 4 further includes a bus line 410. The bus line 410 is an address bus or a data bus that electrically connects the elements in FIG. 4, such as the CPU 401, to each other.

### <Hardware Configuration of Server and PC>

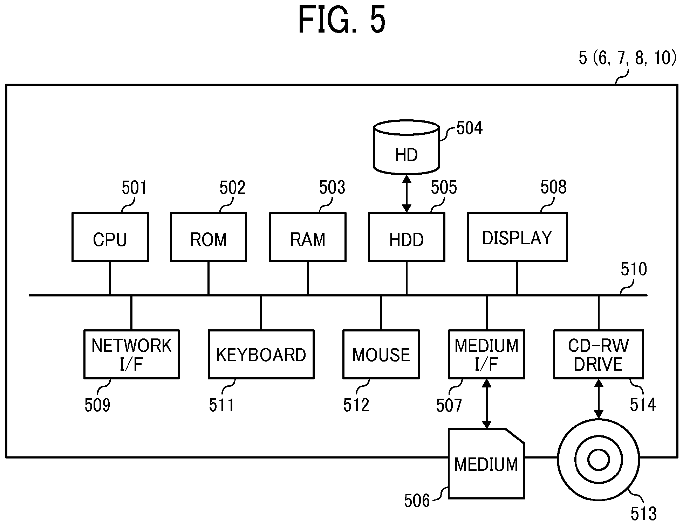

FIG. 5 is a diagram illustrating a hardware configuration of each of the servers 5 to 7, the relay device 8 and the PC 10 according to the embodiment. In this embodiment, the hardware configurations of the privately-owned terminal management server 5, the shared terminal management server 6, the communication management server 7, the relay device 8, the PC 10a, and the PC 10b are substantially the same. In the following description the privately-owned terminal management server 5 is used as an example to describe the hardware configuration of the above-mentioned servers 5 to 8 and the PC 10. Additionally, in the following description of the embodiment, FIG. 5 is used to describe the hardware configuration of each of the shared terminal management server 6, the communication management server 7, the relay device 8, the PC 10a, and the PC 10b

As illustrated in FIG. 5, the privately-owned terminal management server 5, which is implemented by a computer, includes a CPU 501, a ROM 502, a RAM 503, a hard disk (HD) 504, a hard disk drive (HDD) 505, a recording medium 506, a medium I/F 507, a display 508, a network I/F 509, a keyboard 511, a mouse 512, a Compact Disc Rewritable (CD-RW) drive 514, and a bus line 510.

The CPU 501 controls the entire operation of the privately-owned terminal management server 5. The ROM 502 stores a control program for controlling the CPU 501 such as an IPL. The RAM 503 is used as a work area for the CPU 501. The HD 504 stores various data such as a control program. The HDD 505 controls reading and writing of various data to or from the HD 504 under control of the CPU 501. The medium I/F 507 controls reading and writing of data with respect to a recording medium 506 such as a flash memory. The display 508 displays various information including a cursor, a menu, a window, characters, and image. The network I/F 509 is an interface that controls data communication performed with an external device through the communication network 100. The keyboard 511 is one example of an input device provided with a plurality of keys for allowing a user to input characters, numerals, or various instructions. The mouse 512 is another example of the input device with which the user selects a specific instruction or execution, selects a target for processing, and moves a cursor displayed. The CD-RW drive 514 reads and writes various data with respect to a CD-RW 513, which is one example of a removable recording medium.

The privately-owned terminal management server 5 further includes a bus line 510. The bus line 510 is an address bus or a data bus that electrically connects the elements in FIG. 5, such as the CPU 501, to each other.

### <Hardware Configuration of MFP>

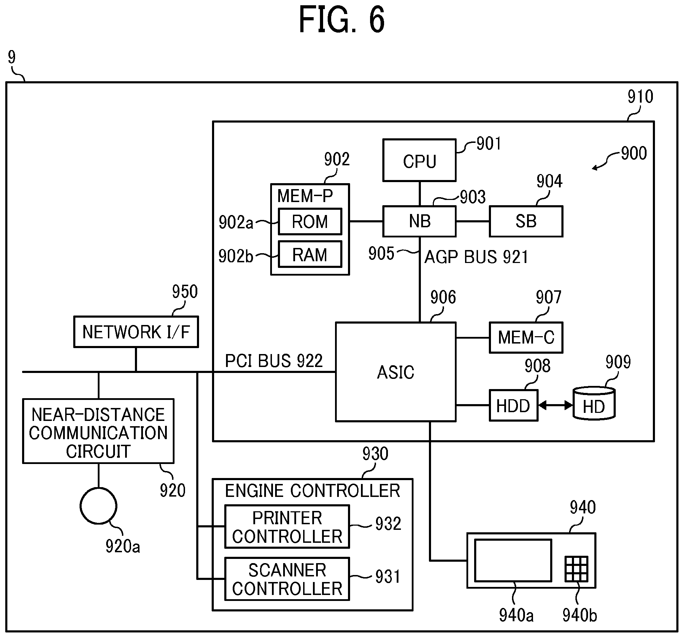

FIG. 6 is a diagram illustrating a hardware configuration of the MFP 9, according to the embodiment. As illustrated in FIG. 6, the MFP 9 includes a controller 910, a near-distance communication circuit 920, an engine controller 930, a control panel 940, and a network I/F 950.

The controller 910 includes a CPU 901 as a main processor, a system memory (MEM-P) 902, a north bridge (NB) 903, a south bridge (SB) 904, an Application Specific Integrated Circuit (ASIC) 906, a local memory (MEM-C) 907, a HDD 908, and a HD 909. The NB 903 and the ASIC 906 are connected through an Accelerated Graphics Port (AGP) bus 921.

The CPU 901 controls the entire operation of the MFP 9. The NB 903 connects the CPU 901, with the MEM-P 902, SB 904, and AGP bus 921. The NB 903 includes a memory controller for controlling reading or writing of various data with respect to the MEM-P 902, a Peripheral Component Interconnect (PCI) master, and an AGP target.

The MEM-P 902 includes a ROM 902a as a memory that stores program and data for achieving various functions of the controller 910. The MEM-P 902 further includes a RAM 902b as a memory that deploys the program and data, or as a drawing memory that stores drawing data for printing. The program stored in the RAM 902b may be stored in any computer-readable recording medium, such as a compact disc-read only memory (CD-ROM), floppy disk (FD), CD-R, or DVD, in a file format installable and executable by a computer, for distribution.

The SB 904 connects the NB 903 with a PCI bus 922 and a peripheral device. The ASIC 906 is an integrated circuit (IC) dedicated to an image processing use, and connects the AGP bus 921, the PCI bus 922, the HDD 908, and the MEM-C 907 to each other. The ASIC 906 includes a PCI target, an AGP master, an arbiter (ARB) as a central processor of the ASIC 906, a memory controller for controlling the MEM-C 907, a plurality of direct memory access controllers (DMACs) capable of converting coordinates of image data with a hardware logic, and a PCI unit that transfers data between the scanner controller 931 and the printer controller 932 through the PCI bus 922. The ASIC 906 may be connected to a Universal Serial Bus (USB) interface, or the Institute of Electrical and Electronics Engineers 1394 (IEEE1394) interface.

The MEM-C 907 is a local memory, which is used as a buffer for image data to be printed or code image. The HD 909 stores various image data, font data for printing, and form data. The HDD 908 reads and writes various data from and to the HD 909 under control of the CPU 901. The AGP bus 921 is a bus interface for a graphics accelerator card, which has been proposed to accelerate graphics processing. Through directly accessing the MEM-P 902 by high-throughput, processes by the AGP bus 921 can be accelerated.

The near-distance communication circuit 920 is provided with an antenna 920a for the near-distance communication circuit 920. The near-distance communication circuit 920 is a communication circuit that communicates in compliance with, for example, an NFC or the Bluetooth.

The engine controller 930 includes a scanner controller 931 and a printer controller 932. The control panel 940 includes a display 940a and various keys 940b. The control panel 940 displays current settings or a selection screen, and is provided with a touch panel for receiving a user input. The keys 940b, which include such as a ten key and a Start key, are used by the user to enter set values of various image forming parameters such as image density parameter. The controller 910 controls the entire operation of the MFP 9. In an example of the operation, the controller 910 controls drawing, communication, or user inputs to the control panel 940. The scanner controller 931 and the printer controller 932 each performs various image processing, such as error diffusion or gamma conversion.

In response to an instruction to select a specific application through the control panel 940, for example, using a mode switch key, the MFP 9 selectively performs a document box function, a copy function, a print function, and a facsimile function. When the document box function is selected, the MFP 9 changes an operating mode to a document box mode to store document data. With a selection of the copy function, the MFP 9 operates in a copy mode. With a selection of the print function, the MFP 9 operates in a printer mode. With selection of the facsimile function, the MFP 9 operates in a facsimile mode.

The network I/F 950 controls communication of data with an external device through the communication network 100. The near-distance communication circuit 920 and the network I/F 950 are electrically connected to the ASIC 906 via the PCI bus 922.

### <Hardware Configuration of Videoconference Terminal>

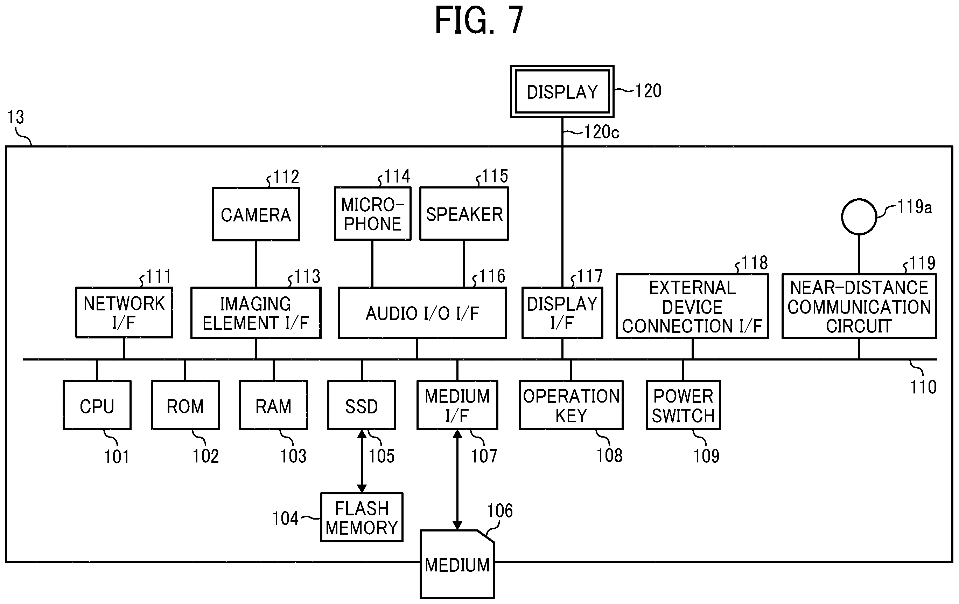

FIG. 7 is a diagram illustrating a hardware configuration of the videoconference terminal 13 according to the embodiment.

As illustrated in FIG. 7, the videoconference terminal 13 includes a CPU 101, a ROM 102, a RAM 103, a flash memory 104, a SSD 105, a medium I/F 107, an operation key 108, a power switch 109, a bus line 110, a network I/F 111, a camera 112, an imaging element I/F 113, a microphone 114, a speaker 115, an audio input/output I/F 116, a display I/F 117, an external device connection I/F 118, a near-distance communication circuit 119, and an antenna 119a for the near-distance communication circuit 119. The CPU 101 controls the entire operation of the videoconference terminal 13. The ROM 102 stores a control program for controlling the CPU 101 such as an IPL. The RAM 103 is used as a work area for the CPU 101. The flash memory 104 stores various data such as a communication control program, image data, and audio data. The SSD 105 controls reading and writing of various data to and from the flash memory 104 under control of the CPU 101. In alternative to the SSD, a hard disk drive (HDD) may be used. The medium I/F 107 controls reading and writing of data with respect to a recording medium 106 such as a flash memory. The operation key (keys) 108 is operated by a user to input a user instruction such as a user selection of a communication destination of the videoconference terminal 13. The power switch 109 is a switch that receives an instruction to turn on or off the power of the videoconference terminal 13.

The network I/F 111 is an interface capable of performing data communication with an external device through the communication network 100 such as the Internet. The camera 112 is an example of a built-in imaging device capable of capturing a subject to obtain image data under control of the CPU 101. The imaging element I/F 113 is a circuit that controls driving of the camera 112. The microphone 114 is an example of a built-in audio collecting device capable of inputting audio under control of the CPU 101. The audio I/O I/F 116 is a circuit for inputting or outputting an audio signal between the microphone 114 and the speaker 115 under control of the CPU 101. The display I/F 117 is a circuit for transmitting image data to an external display 120 under control of the CPU 101. The external device connection I/F 118 is an interface circuit that connects the videoconference terminal 13 to various external devices. The near-distance communication circuit 119 is a communication circuit that communicates in compliance with, for example, an NFC or the Bluetooth.

The bus line 110 is is an address bus or a data bus that electrically connects the elements in FIG. 7, such as the CPU 101, to each other.

The display 120 is, for example, a liquid crystal or organic electroluminescence (EL) display that displays an image of a subject, an operation icon, or the like. The display 120 is connected to the display I/F 117 by a cable 120c. The cable 120c may be an analog red green blue (RGB) (video graphic array (VGA)) signal cable, a component video cable, a high-definition multimedia interface (HDMI) (registered trademark) signal cable, or a digital video interactive (DVI) signal cable.

The camera 112 includes a lens and a solid-state imaging element that converts an image (video) of a subject to electronic data by converting light to electric charge. As such a solid-state imaging element, for example, a complementary metal-oxide-semiconductor (CMOS) or a charge-coupled device (CCD) is used. The external device connection I/F 118 is capable of connecting an external device such as an external camera, an external microphone, and an external speaker through a USB cable or the like. In a case where an external camera is connected, the external camera is driven in preference to the built-in camera 112 under control of the CPU 101. Similarly, in a case where an external microphone is connected or an external speaker is connected, the external microphone or the external speaker is driven in preference to the built-in microphone 114 or the built-in speaker 115 under control of the CPU 101.

The recording medium 106 is removable from the videoconference terminal 13. The recording medium 106 is not limited to the flash memory 104. The recording medium 106 may be any non-volatile memory that reads or writes data under control of the CPU 101. In some of the embodiment, an EEPROM is used.

### <Example Screens of Electronic Whiteboard>

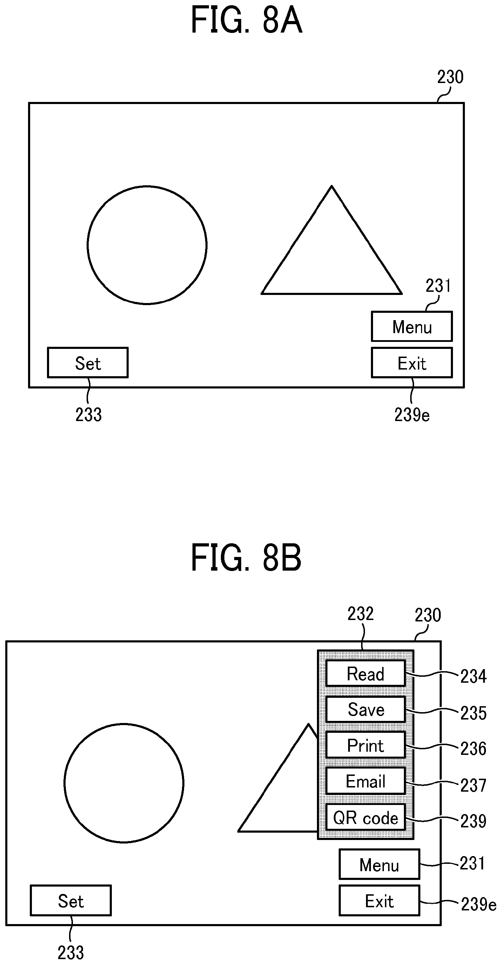

Referring to FIGs. 8A to 8C, example screens of the electronic whiteboard 2 are described. FIGs. 8A to 8C illustrate the example screens displayed on the display 220 of the electronic whiteboard 2. The electronic whiteboard 2 displays, on the display 220, a drawing image screen 230 as illustrated in FIG. 8A, for example. The drawing image screen 230 displays a drawing image (such as a circle and a triangle in figure) drawn by the user with, for example, the electronic pen 2500. The drawing image screen 230 displays a "Menu" button 231 and an "Exit" button 239e at the lower right. The drawing image screen 230 displays a "Set" button 233 at the lower left.

The "Menu" button 231 is a graphical image, which, when selected by the user, causes the electronic whiteboard 2 to perform various types of functions of the electronic whiteboard 2 according to user operation. The "Set" button 233 is a graphical image, which, when selected, causes the electronic whiteboard 2 to display a security configuration screen 300, which is described later. The "Exit" button 239e is a graphical image, which, when selected, enables the user to log out from the electronic whiteboard 2 and causes the electronic whiteboard 2 to finish displaying a screen. When the user presses the "Menu" button 231 with, for example, the electronic pen 2500, the electronic whiteboard 2 displays, as illustrated in FIG. 8B, on the drawing image screen 230, a menu selection window (image) 232 for selecting a function provided by the electronic whiteboard 2.

As illustrated in FIG. 8B, the menu selection window 232 includes a "Read" button 234, a "Save" button 235, a "Print" button 236, an "Email" button 237, and a "Quick Response (QR) code" button 239.

The "Read" button 234 is a graphical image, which, when selected, causes the electronic whiteboard 2 to read drawing image data that is stored in the SSD 204 after the image is drawn, to display the image on the display 220. The "Save" button 235 is a graphical image, which, when selected, causes the electronic whiteboard 2 to store the drawing image drawn by the user in the SSD 204 as the drawing image data. The "Print" button 236 is a graphical image, which, when selected, causes the electronic whiteboard 2 to print the drawing image displayed on the drawing image screen 230 using such as the MFP 9. The "Email" button 237 is a graphical image, which, when selected, causes the electronic whiteboard 2 to attach the drawing image data representing the drawing image being displayed on the drawing image screen 230 to an email and send the email to which the drawing image data is attached to the PC 10a or the PC 10b, etc. The "QR code" button 239 is a graphical image, which, when selected, causes the electronic whiteboard 2 to display, on the display 220, a QR code (registered trademark) embedded with a device ID identifying the own device (that is, the electronic whiteboard 2).

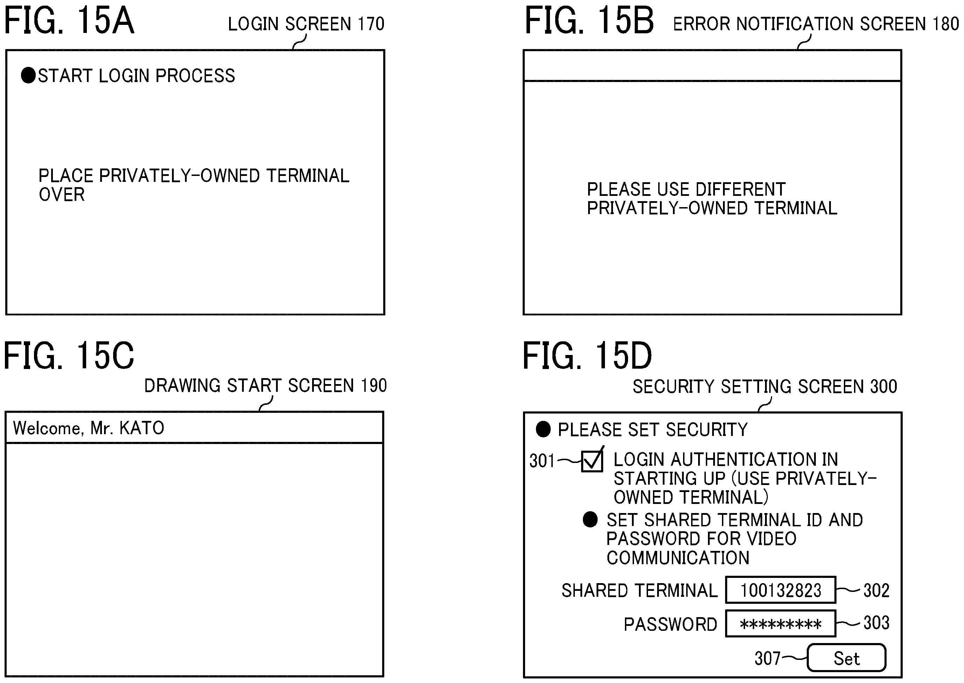

The electronic whiteboard 2 further displays, on the display 220, the security configuration screen 300 as illustrated in FIG. 15D, as a screen that is displayed according to the user's instruction. The security configuration screen 300 includes a check box 301 for selecting whether to perform login (first login) authentication when the electronic whiteboard 2 is started up. A presence or absence of the check box 301 is reflected to setting information, which indicates whether the first login authentication is set. The security configuration screen 300 also includes input fields 302 and 303 for inputting, respectively, a shared terminal ID and a password that are required for logging into the communication management server 7 (second login) when the electronic whiteboard 2 is used as a starting shared terminal for a videoconference. The second login authentication is performed even when the first login authentication, which is a login to the privately-owned terminal management server 5, is not performed. The shared terminal ID and the password input by user are set in advance. For example, the user, such as an administrator, is informed in advance, a shared terminal ID and a password registered in an authentication management table, which is described in detail later, and inputs values of the shared terminal ID and the password to the input field 302 and 303, respectively. The security configuration screen 300 includes a "Set" button 307 at the lower right to confirm a presence or absence of check box 301 and input content of the input fields 302 and 303. When the user input a shared terminal ID and a password to the input fields 302 and 303, respectively, and presses the "Set" button 307, a storing and reading processor 29 stores and registers the shared terminal ID ("registered shared terminal ID") and the password ("registered password") in a memory 2000, which is described later. The registered shared terminal ID is one example of registered information, or registered authentication information. In alternative to the display 220 of the electronic whiteboard 2, the security configuration screen 300 may be displayed on a display of the PC 10.

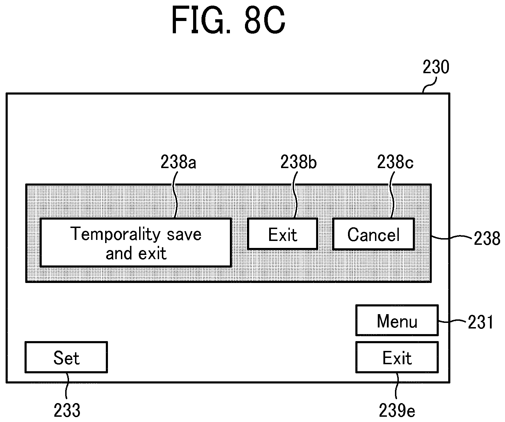

Referring again to FIG. 8B, when the user presses the "Exit" button 239e with, for example, the electronic pen 2500, the electronic whiteboard 2 displays, as illustrated in FIG. 8C, an exit window 238 for logging out and finishing the display on the drawing image screen 230.

As illustrated in FIG. 8C, the exit window 238 includes a "Temporarily save and exit" button 238a, an "Exit" button 238b, and a "Cancel" button 238c.

The "Temporarily save and exit" button 238a is a graphical image, which, when selected, causes the electronic whiteboard 2 to temporarily store the drawing image data, allows the user to log out from the electronic whiteboard 2, and causes the electronic whiteboard 2 to finish displaying. The "Exit" button 238b is a graphical image, which, when selected, allows the user to log out from the electronic whiteboard 2, and causes the electronic whiteboard 2 to finish displaying, without temporarily storing the drawing image data. When the "Exit" button 238b is selected, an image represented with the drawing image data is not to be displayed (redisplayed) when the user logs in the electronic whiteboard 2 next. The "Cancel" button 238c is a graphical image, which, when selected, causes the electronic whiteboard 2 to finish displaying the exit window 238 and return to the drawing image screen 230 illustrated in FIG. 8A.

Any one of the IDs described above is an example of identification information identifying a corresponding device or terminal, or user, who operates the device or terminal. The device ID is an example of device identification information. The shared terminal ID is an example of terminal identification information. The user ID is an example of user identification information. Additionally, examples of the device identification information and the terminal identification information include a manufacturing number, and any other identification information that identifies the communication terminal. Additionally, examples of the user identification information includes an employee number, a driver license number, and an individual number called "My Number" under the Japanese Social Security and Tax Number System.

Further, any one of the above-described control programs may be recorded in a file in a format installable or executable on a computer-readable recording medium for distribution. Examples of the recording medium include, but not limited to, a compact disc-recordable (CD-R), digital versatile disc (DVD), blue-ray disc, and SD card. In addition, such recording medium may be provided in the form of a program product to users within a certain country or outside that country.

Each of the servers 5, to 7, and the relay device 8 may be configured by a single computer or a plurality of computers to which divided portions (functions, means, or storages) are arbitrarily allocated.

### <Functional Configuration of Communication System>

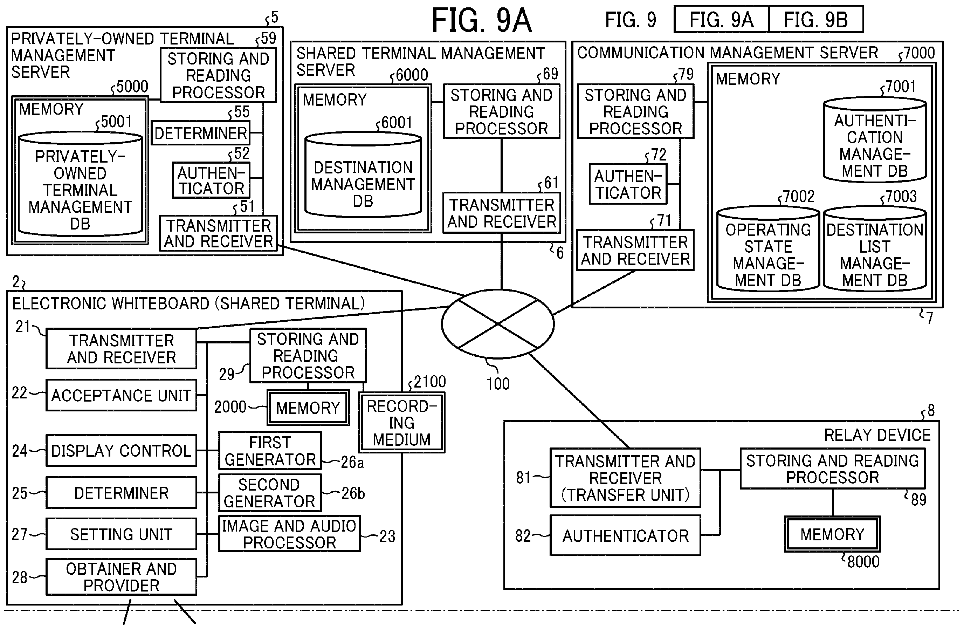

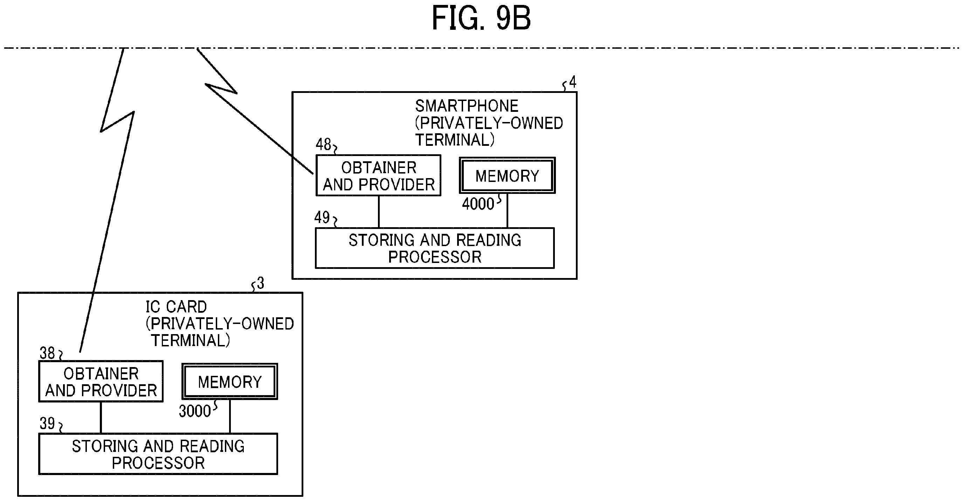

Referring to FIGs. 9 (9A and 9B) to 13, a functional configuration of the communication system 1 is described according to the embodiment.

FIGs. 9A and 9B are a diagram illustrating a functional configuration of the communication system 1. In FIGs. 9A and 9B, units, or sections, of the terminals, devices, and servers, illustrated in FIG. 1 related to processes or operation described below are illustrated.

### <Functional Configuration of Electronic Whiteboard>

As illustrated in FIG. 9A, the electronic whiteboard 2 includes a transmitter and receiver 21, an acceptance unit 22, an image and audio processor 23, a display control 24, a determiner 25, a first generator 26a, a second generator 26b, a setting unit 27, an obtainer and provider 28, and the storing and reading processor 29. Each of the-above mentioned units is a function that is implemented by or that is caused to function by operating any of the elements illustrated in FIG. 2 according to instructions from the CPU 201 based on an electronic whiteboard control program, which is expanded from the SSD 204 to the RAM 203. The electronic whiteboard 2 further includes the memory 2000, which is implemented by the RAM 203 and SSD 204 illustrated in FIG. 2.

### (Functional Units of Electronic Whiteboard)

Each functional unit of the electronic whiteboard 2 is described below. The transmitter and receiver 21, which may be implemented by the instructions of the CPU 201, the network I/F 205, and the external device connection I/F 206, illustrated in FIG. 2, transmits and receives various data (or information) to and from other terminal, apparatus, and system through the communication network 100.

The acceptance unit 22, which is implemented by the instructions of the CPU 201, the contact sensor 214, and the electronic pen controller 216, illustrated in FIG. 2, accepts various inputs from the user.

The image and audio processor 23 is implemented by the instructions of the CPU 201, illustrated in FIG. 2. The image and audio processor 23 applies image processing to image data that is obtained by capturing a subject with the camera 2400. After sound generated by the user is converted to an audio signal with the microphone 2700, the image and audio processor 23 applies processing to audio data based on the audio signal. The image and audio processor 23 outputs the audio signal according to the audio data to the speaker 2800, and the speaker 2800 outputs audio. The image and audio processor 23 obtains drawing image data, which is drawn by the user with the electronic pen 2500 or the user's hand H onto the display 220, and converts the drawing image data to coordinate data. For example, when the electronic whiteboard 2x in one site transmits the coordinate data to the electronic whiteboard 2y in another site, the electronic whiteboard 2y causes the display 220 to display a drawing image having the same content with an image drawn with the electronic whiteboard 2x based on the received coordinate data.

The display control 24, which is implemented by the instructions of the CPU 201 illustrated in FIG. 2 and by the display controller 213 illustrated in FIG. 2, causes the display 220 to display a drawing image.

The determiner 25, which is implemented by the instructions of the CPU 201 illustrated in FIG. 2, determines whether the electronic whiteboard 2 has received any privately-owned terminal ID, for example, from the IC card 3 or the smartphone 4.

The first generator 26a, which is implemented by the instructions of the CPU 201 illustrated in FIG. 2, generates image data in a PDF format, from the drawing image data in a bitmap format generated based on drawing image drawn by the user. The second generator 26b, which is implemented by the instructions of the CPU 201 illustrated in FIG. 2, generates image data in a RPCS format, from the drawing image data in a bitmap format generated based on drawing image drawn by the user. The image data may be in any suitable format, such as PDL or PS, which is other than the RPCS.

The setting unit 27, which is implemented by the instructions of the CPU 201 illustrated in FIG. 2, configures settings such as an email sender, an email destination, and a print requester name of a user who requests printing, according to print data.

The obtainer and provider 28, which is implemented by the instructions of the CPU 201 and the near-distance communication circuit 219 with the antenna 219a, illustrated in FIG. 2, communicates with the IC card 3 or the smartphone 4 to obtain and provide data from and to the IC card 3 or the smartphone 4 by the near-distance communication.

The storing and reading processor 29, which is implemented by the instructions of the CPU 201 and the SSD 204 illustrated in FIG. 2, stores various types of data in the memory 2000 or the recording medium 2100 and reads various types of data stored in the memory 2000 or the recording medium 2100. The memory 2000 overwrites the image data and the audio data each time when the image data and the audio data are received in communicating with other electronic whiteboard or videoconference terminal. The display 220 displays an image based on image data before being overwritten, and the speaker 2800 outputs audio based on audio data before being overwritten.

The recording medium 2100 is implemented by the USB memory 2600 illustrated in FIG. 2.

### <Functional Configuration of IC Card>

As illustrated in FIG. 9B, the IC card 3 includes an obtainer and provider 38, and a storing and reading processor 39. Each of the above-mentioned units is a function that is implemented by or that is caused to function by operating any of the elements illustrated in FIG. 2 according to an instruction from the CPU 311 according to an IC card control program, which is expanded from the EEPROM 314 to the RAM 313. The IC card 3 further includes a memory 3000, which is implemented by the RAM 313 and the EEPROM 314 illustrated in FIG. 3.

### (Functional units of IC Card)

Each functional unit of the IC card 3 is described below. The obtainer and provider 38, which is implemented by the instructions of the CPU 311 and the antenna coil 330 illustrated in FIG. 3, communicates with the electronic whiteboard 2 to obtain and provide data from and to the electronic whiteboard 2 by near-distance communication.

The storing and reading processor 39, which is implemented by the instructions of the CPU 311 illustrated in FIG. 3, stores various types of data in the memory 3000 and reads various types of data stored in the memory 3000. The memory 3000 stores a privately-owned terminal ID for identifying the IC card 3 as one example of a privately-owned terminal.

### <Functional Configuration of Smartphone>

As illustrated in FIG. 9B, the smartphone 4 includes an obtainer and provider 48 and a storing and reading processor 49. Each of the above-mentioned units is a function that is implemented by or that is caused to function by operating any of the elements illustrated in FIG. 4 according to an instruction from the CPU 401 according to a smartphone control program, which is expanded from the EEPROM 404 to the RAM 403. The smartphone 4 further includes a memory 4000, which is implemented by the RAM 403 and the EEPROM 404 illustrated in FIG. 4.

### (Functional Units of Smartphone)

Each functional unit of the smartphone 4 is described below. The obtainer and provider 48, which is implemented by the instructions of the CPU401 and the near-distance communication circuit 419 with the antenna 419a, illustrated in FIG. 4, communicates with the electronic whiteboard 2 to obtain and provide data from and to the electronic whiteboard 2 by near-distance communication.

The storing and reading processor 49, which is implemented by the instructions of the CPU 401 illustrated in FIG. 4, stores various types of data in the memory 4000 and reads various types of data stored in the memory 4000. The memory 4000 stores a privately-owned terminal ID for identifying the smartphone 4 as one example of a privately-owned terminal.

### <Functional Configuration of Privately-Owned Terminal Management Server>

The privately-owned terminal management server 5 includes a transmitter and receiver 51, an authenticator 52, a determiner 55, and a storing and reading processor 59. Each of the above-mentioned units is a function that is implemented by or that is caused to function by operating any of the elements illustrated in FIG. 5 according to an instruction from the CPU 501 according to a privately-owned terminal management server control program, which is expanded from the HD 504 to the RAM 503. The privately-owned terminal management server 5 includes a memory 5000 implemented by the HD 504 illustrated in FIG. 5.

### (Privately-Owned Terminal Management Table)

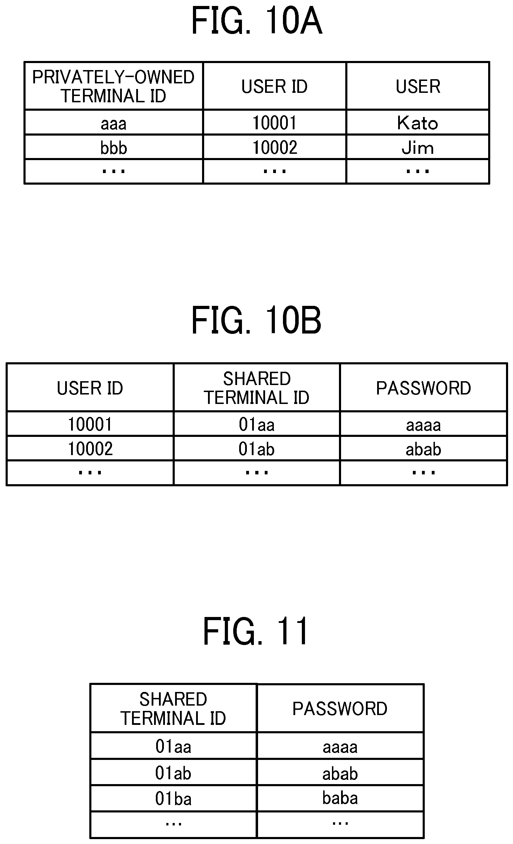

FIG. 10A is an illustration of an example data structure of a privately-owned terminal management table. The memory 5000 stores a privately-owned terminal management database DB5001 including the privately-owned terminal management table illustrated in FIG. 10A. The privately-owned terminal management table illustrated in FIG. 10A stores, the privately-owned terminal IDs (privately-owned terminal IDs), each of which identifies a corresponding one of the plurality of privately-owned terminals (IC card 3, smartphone 4) registered to the privately-owned terminal management server 5. Additionally, in the privately-owned terminal management table in FIG. 10A, a user ID identifying a user who owns a corresponding privately-owned terminal and a user name of the user are stored in association with each corresponding privately-owned terminal ID. The privately-owned terminal ID is an example of terminal identification information.

### (Functional Units of Privately-Owned Terminal Management Server)

Each functional unit of the privately-owned terminal management server 5 is described in detail below. In the following description of the functional configuration of the privately-owned terminal management server 5, the hardware elements related to each functional unit of the privately-owned terminal management server 5, illustrated in FIG. 5, are also described.

The transmitter and receiver 51 of the privately-owned terminal management server 5 illustrated in FIG. 9A, which is implemented by the instructions of the CPU 501 illustrated in FIG. 5 and by the network I/F 509 illustrated in FIG. 5, transmits and receives various types of data (or information) to and from another terminal, device, or system via the communication network 100.

The authenticator 52, which is implemented by the instructions of the CPU 501 illustrated in FIG. 5, determines whether a privately-owned terminal ID transmitted from the electronic whiteboard 2 is a privately-owned terminal (IC card 3, smartphone 4) owned by the authorized user, which is previously registered.

The determiner 55, which is implemented by the instructions of the CPU 501 illustrated in FIG. 5, performs various types of determination.

The storing and reading processor 59, which is implemented by the instructions of the CPU 501 illustrated in FIG. 5 and the HDD 505 illustrated in FIG. 5, stores various types of data in the memory 5000 and reads various types of data stored in the memory 5000.

### <Functional Configuration of Shared Terminal Management Server>

The shared terminal management server 6 includes a transmitter and receiver 61, and a storing and reading processor 69. Each of the above-mentioned units is a function that is implemented by or that is caused to function by operating any of the elements illustrated in FIG. 5 according to an instruction from the CPU 501 according to a privately owned terminal management server control program, which is expanded from the HD 504 to the RAM 503. The shared terminal management server 6 includes a memory 6000 implemented by the HD 504 illustrated in FIG. 5.

### (Shared Terminal Management Table)

FIG. 10B is an illustration of an example data structure of a shared terminal management table. The memory 6000 stores a shared terminal management database DB6001 including the shared terminal management table illustrated in FIG. 10B. The shared terminal management table illustrated in FIG. 10B stores, the user IDs each of which identifies a corresponding one of the users managed with the shared terminal management server 6. Additionally, in the shared terminal management table, a shared terminal ID for identifying a corresponding one of the plurality of shared terminals and a password are stored in association with each user ID. The shared terminal ID and the password are used for logging into the communication management server 7. The shared terminal ID is an example of terminal identification information.

### (Functional Units of Shared Terminal Management Server)

Each functional unit of the shared terminal management server 6 is described in detail below. In the following description of the functional configuration of the shared terminal management server 6, the hardware elements related to each functional unit of the shared terminal management server 6, illustrated in FIG. 5, are also described.

The transmitter and receiver 61 of the shared terminal management server 6 illustrated in FIG. 9A, which is implemented by the instructions of the CPU 501 illustrated in FIG. 5 and by the network I/F 509 illustrated in FIG. 5, transmits and receives various types of data (or information) to and from another terminal, device, or system via the communication network 100.

The storing and reading processor 69, which is implemented by the instructions of the CPU 501 illustrated in FIG. 5 and the HDD 505 illustrated in FIG. 5, stores various types of data in the memory 6000 and reads various types of data stored in the memory 6000.

### <Functional Configuration of Communication Management Server>

The communication management server 7 includes a transmitter and receiver 71, a determiner 72, and a storing and reading processor 79. Each of the above-mentioned units is a function that is implemented by or that is caused to function by operating any of the elements illustrated in FIG. 5 according to an instruction from the CPU 501 according to a communication management program expanded from the HD 504 to the RAM 503. The communication management server 7 includes a memory 7000 implemented by the HD 504 illustrated in FIG. 5.

### (Authentication management table)

FIG. 11 is an illustration of an example data structure of an authentication management table. The memory 7000 stores an authentication management DB 7001 including the authentication management table illustrated in FIG. 11. The authentication management table stores each one of the terminal IDs of the shared communication terminals managed with the communication management server 7 and a corresponding password in association with each other.

### (Operating State Management Table)

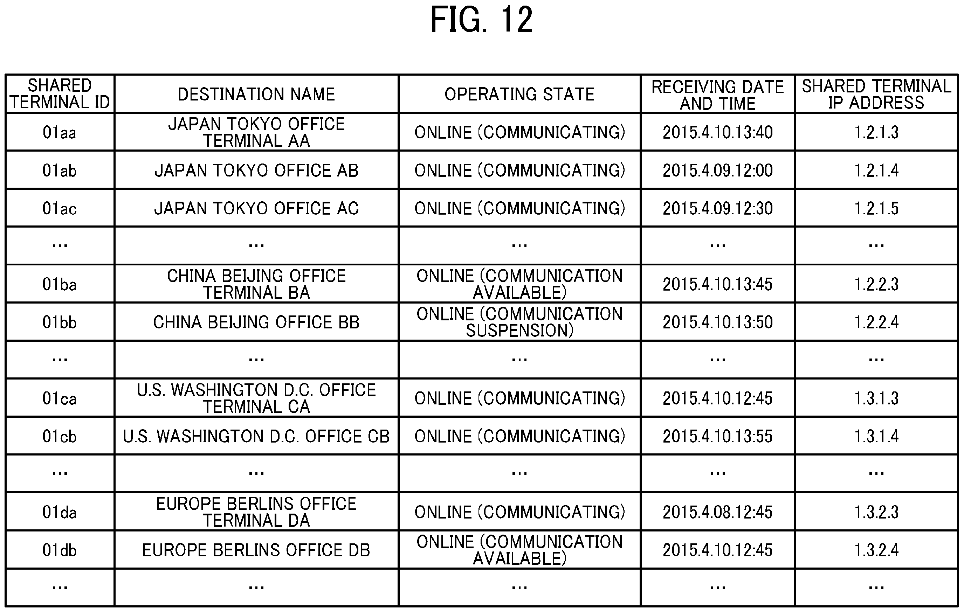

FIG. 12 is an illustration of an example data structure of an operating state management table. The memory 7000 further stores the operating state management DB 7002 including the operating state management table illustrated in FIG. 12. The operating state management table stores, for each one of the shared terminals, a destination name, which is a name of counterpart where a destination of counterpart (destination) shared terminal belongs to, an operating state of each shared communication terminal, a receiving date and time, which is described later, indicating when login request information is received with the communication management server 7, and an internet protocol (IP) address of the shared terminal in association with each other. The shared terminal ID, the destination name, and the terminal IP address are stored in advance to receive a service provided with the communication management server 7.

### (Destination List Management Table)

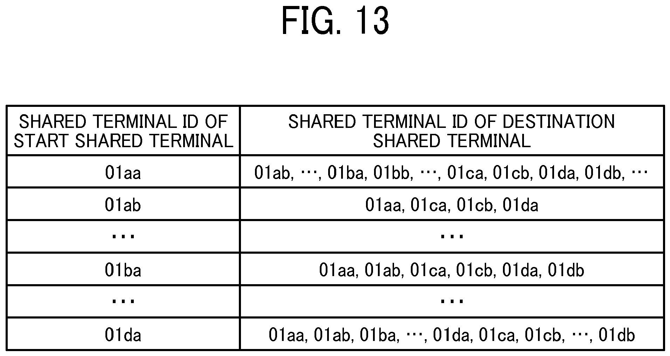

FIG. 13 is an illustration of an example data structure of a destination (contact) list management table. The memory 7000 further stores the destination list management DB 7003 including the destination list management table illustrated in FIG. 13. The destination list management table stores each of the shared terminal IDs, each of which identifies one of the shared terminal that starts communication, and all of the shared terminal ID of a corresponding destination of the shared terminals registered as destination candidates.

A destination list is one example of destination information. In some of the embodiments, the destination information does not have a list format, but arrangement of pieces of information associated with the destination of the shared terminal ID, for example.

### (Functional Units of Communication Management Server)

Each functional unit of the communication management server 7 is described in detail below.

In the following description of the functional configuration of the communication management server 7, the hardware elements related to each functional unit of the communication management server 7, illustrated in FIG. 5, are also described.

The transmitter and receiver 71 of the communication management server 7 illustrated in FIG. 9A, which is implemented by the instructions of the CPU 501 illustrated in FIG. 5 and by the network I/F 509 illustrated in FIG. 5, transmits and receives various types of data (or information) to and from another terminal, device, or system via the communication network 100.

The determiner 72, which is implemented by the instructions of the CPU 501 illustrated in FIG. 5, performs various types of determination.

The storing and reading processor 79, which is implemented by the instructions of the CPU 501 illustrated in FIG. 5 and the HDD 505 illustrated in FIG. 5, stores various types of data in the memory 7000 and reads various types of data stored in the memory 7000.

### <Functional Configuration of Relay Device>

The relay device 8 includes a data transmitter and receiver 81 that also serves as a transfer unit, a determiner 82, and a storing and reading processor 89. Each of the above-mentioned units is a function that is implemented by or that is caused to function by operating any of the elements illustrated in FIG. 5 according to an instruction from the CPU 501 according to a relay device control program expanded from the HD 504 to the RAM 503. The relay device 8 also includes a memory 8000 implemented by the RAM 503 illustrated in FIG. 5 or the HD 504 illustrated in FIG. 5.

### (Functional Configuration of Relay Device)

Each functional unit of the relay device 8 is described in detail below. In the following description of the functional configuration of the relay device 8, the hardware elements related to each functional unit of the relay device 8 in FIG. 5 are also described.

The transmitter and receiver 81 of the relay device 8 illustrated in FIG. 9A, which is implemented by the instructions of the CPU 501 illustrated in FIG. 5 and by the network I/F 509 illustrated in FIG. 5, transmits and receives various types of data (or information) to and from another terminal, device, or system via the communication network 100. The transmitter and receiver 81 also serves as a transfer unit, which transfers image data and audio data transmitted from one of the shared terminals 2 to another one of the shared terminals 2.

The determiner 82, which may be implemented by the instructions of the CPU 501 illustrated in FIG. 5, determines delay of data transmission.

The storing and reading processor 89, which is implemented by the instructions of the CPU 501 illustrated in FIG. 5 and the HDD 505 illustrated in FIG. 5, stores various types of data in the memory 8000 and reads various types of data stored in the memory 8000.

### <Processes and Operation>

A description of processes and operation performed by the communication system 1 is given below. The description is given of a case where a user A and a user B are in a certain meeting room using the electronic whiteboard 2x, as illustrated in FIG. 1, and the user A operates the electronic whiteboard 2x to communicate with the electronic whiteboard 2y.

### <First Login Process>

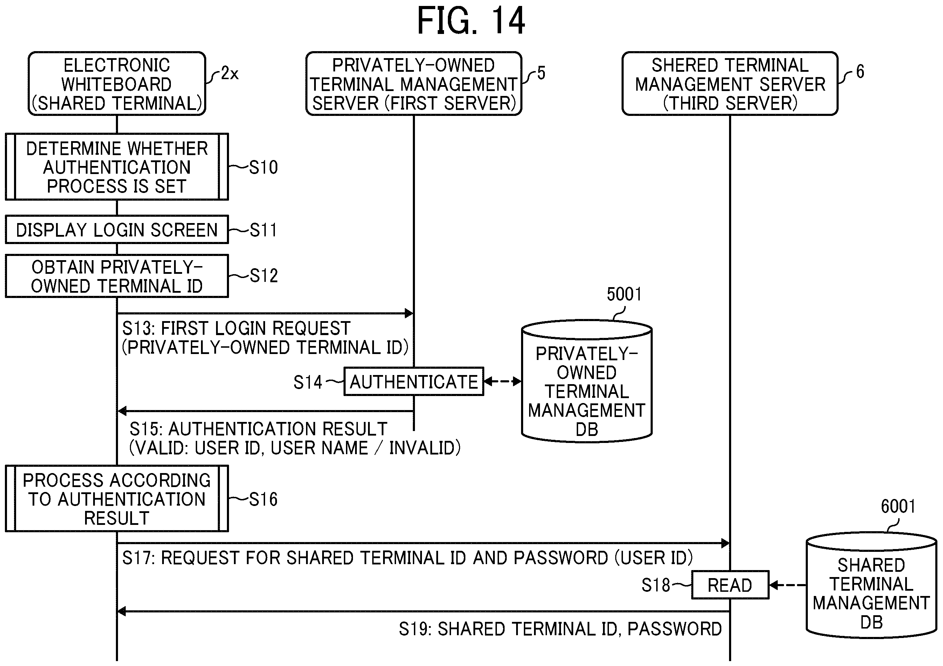

A first login authentication process (first login process) in which the user A uses the IC card 3 to log into the privately-owned terminal management server 5 to start drawing images is described with reference to FIGs. 14 to 18. FIG. 14 is a sequence diagram illustrating the first login process of logging into the privately-owned terminal management server 5. In the following description, various requests and results are transmitted and received as data, or information.

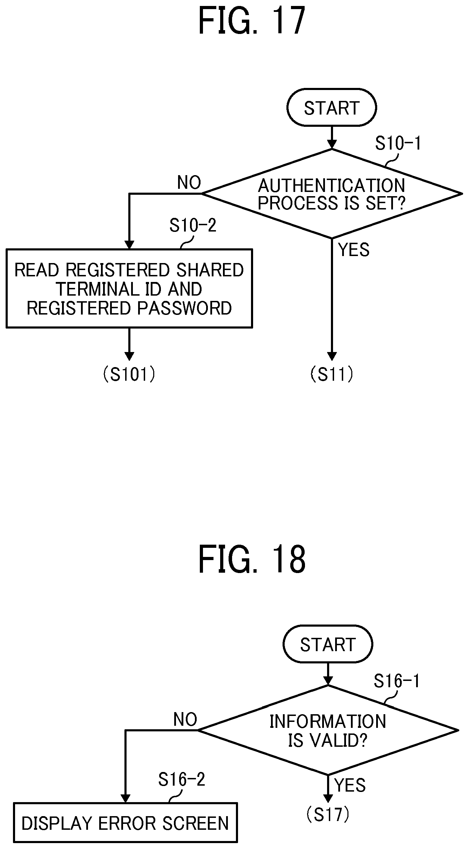

When the user A presses the power switch 222 of the electronic whiteboard 2x to start a videoconference, the electronic whiteboard 2x determines whether the setting information indicates that the first login authentication is set (S10). Determining whether the first login authentication is set, performed in S10 is described in detail with reference to FIG. 17 below. FIG. 17 is a flowchart illustrating a process of determining whether the first login authentication is set.

As illustrated in FIG. 17, the determiner 25 determines whether the first login authentication is to be performed by the setting unit 27 when the electronic whiteboard 2x starts up (S10-1). When the determiner 25 determines that the first login authentication process is not set (S10-1: NO), the storing and reading processor 29 reads from the memory 2000 a registered starting shared terminal ID and a registered password for a second login authentication process (second login process) (S10-2). Subsequently, the process proceeds to S101, and the shared terminal ID (registered shared terminal ID) and the password (registered password), which are read in S10-2 are transmitted.

On the other hand, when the determiner 25 determines that the first login authentication process is set (S10-1: YES), the process proceeds to S11. A description is given of a case in which the determiner 25 determines that the settings information indicates to perform the first login authentication when the electronic whiteboard 2x starts up.

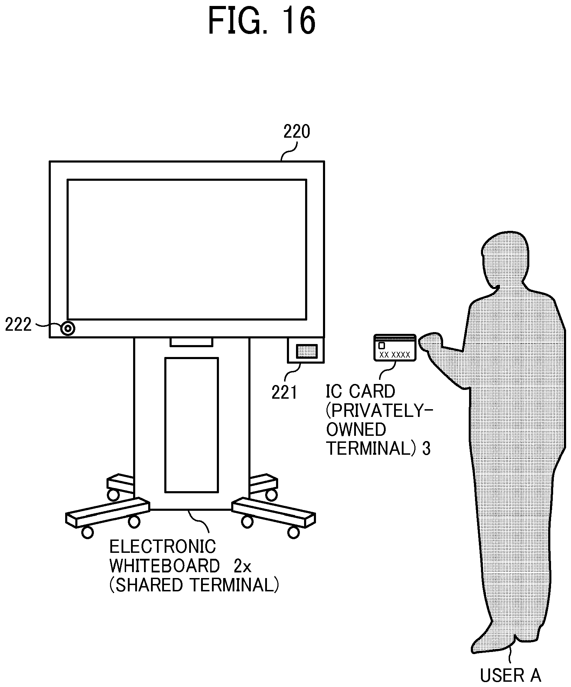

The display control 24 causes the display 220 to display a login screen 170 as illustrated in FIG. 15A (S11). When the user A places the IC card 3 into proximity to (over) the near-distance communication device 221 of the electronic whiteboard 2x as illustrated in FIG. 16 after the login screen 170 is displayed on the display 220, the obtainer and provider 28 of the electronic whiteboard 2x obtains a privately-owned terminal ID of the IC card 3 from the obtainer and provider 38 of the IC card 3 (S12). The transmitter and receiver 21 of the electronic whiteboard 2x transmits the privately-owned terminal management server 5 a request for the first login authentication (hereinafter, referred to as first login request, or first login request information) (S13). The first login request information includes the privately-owned terminal ID obtained in S12. The privately-owned terminal management server 5 receives the first login request information with the transmitter and receiver 51.

Subsequently, the authenticator 52 of the privately-owned terminal management server 5 performs the login authentication of the IC card 3 using the privately-owned terminal ID (S14). More specifically, the storing and reading processor 59 searches the privately-owned terminal management table (FIG. 10A) using the privately-owned terminal ID received in S13 as a search key, to obtain a user ID associated with the privately-owned terminal ID. When the user ID associated with the privately-owned terminal ID is found, the authenticator 52 confirms that the privately-owned terminal ID of the IC card 3 is valid and the IC card 3 is a legitimate IC card owned by an authorized user identified with the user ID that is found. When the user ID associated with the privately-owned terminal ID is not found, the authenticator 52 determines that the IC card 3 (privately-owned terminal ID) is not a legitimate IC card.

The transmitter and receiver 51 of the privately-owned terminal management server 5, then, transmits an authentication result to the electronic whiteboard 2x (S15). When the authenticator 52 determines that the IC card 3 is a legitimate IC card, the authentication result includes information indicating that the IC card 3 is a legitimate IC card, the user ID identifying a user who owns the IC card 3, and the user name. When the authenticator 52 determines that the IC card 3 is not a legitimate IC card, the authentication result includes information indicating that the IC card 3 is not a legitimate IC card. The transmitter and receiver 21 of the electronic whiteboard 2x, accordingly, receives the authentication result. The electronic whiteboard 2x, then, operates according to the authentication result (S16). Referring to FIG. 18, a detailed description is given of S16 of the process according to the authentication result. FIG. 18 is a flowchart illustrating a process according to the authentication result in the first login process.

As illustrated in FIG. 18, the determiner 25 determines whether information included in the authentication result received in S15 is valid, namely whether the privately-owned terminal ID transmitted in S13 is valid (S16-1). When the determiner 25 determines that the information included in the authentication result indicates is not valid, namely the first login authentication process is failed (S16-1: NO), the display control 24 causes the display 220 to display an error notification screen 180 as illustrated in FIG. 15B (S16-2). When the determiner 25 determines that the information included in the authentication result is valid, namely the first login process succeeds (S16-1: YES), the process proceeds to S17. A description is given of a case where the first login process succeeds.

The transmitter and receiver 21 of the electronic whiteboard 2x transmits to the shared terminal management server 6 a request for a shared terminal ID and a password used to log into the communication management server 7 (S17). This request includes the user ID that is received in S15. The transmitter and receiver 61 of the shared terminal management server 6, accordingly, receives the request for the shared terminal ID and the password.

Subsequently, the storing and reading processor 69 of the shared terminal management server 6 searches the shared terminal management table (FIG. 10B), using the user ID received in S17 as a search key, to read a corresponding shared terminal ID and password (S18). The transmitter and receiver 61 transmits to the electronic whiteboard 2x the shared terminal ID and the password (S19). The transmitter and receiver 21 of the electronic whiteboard 2x receives shared terminal ID and the password used to log into the communication management server 7. The received shared terminal ID and the password may be referred to as a received shared terminal ID and a received password, respectively. The received shared terminal ID is an example of received identification information, or received authentication information.

The display control 24 causes the display 220 to display a drawing start screen 190 as illustrated in FIG. 15C. The drawing start screen 190 includes a ticker, in this example, such as "Welcome, Mr. Kato", to indicate that the user can start drawing. The text, "Kato", is generated using the user name that is received in S15. Thus, the user A and the user B are able to start drawing on the electronic whiteboard 2x.

### <Second Login Process>

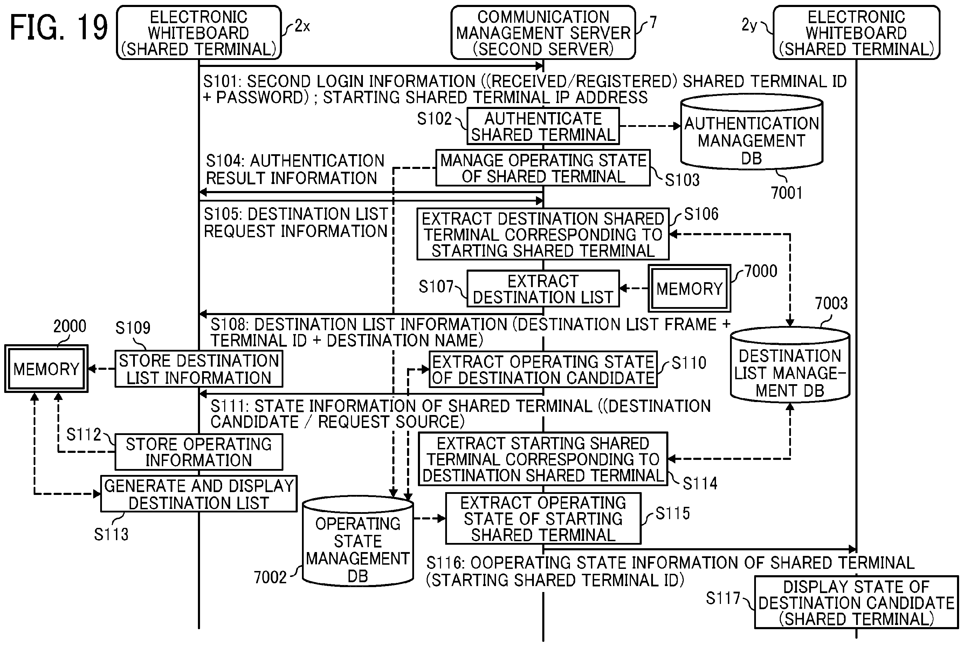

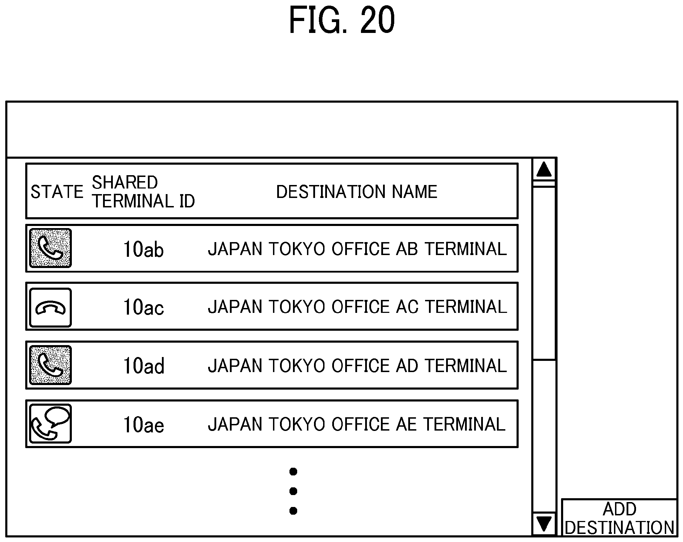

Referring to FIG. 19 and FIG. 20, a second login process (second login authentication process) of logging into the communication management server 7 to start a video communication is described. FIG. 19 is a sequence diagram illustrating the second login process of logging into the communication management server 7. FIG. 20 is an illustration of an example of a destination (contact) list.

After S19 of FIG. 14, the transmitter and receiver 21a of the electronic whiteboard 2x automatically transmits to the communication management server 7 a second login request indicating second login information (S101). The second login information includes the shared terminal ID for identifying the electronic whiteboard 2x and the password.

There are two types of shared terminal IDs and passwords. One of the two types, a first type, includes a registered shared terminal ID and a shared password, which are a first shared terminal ID and a first password, registered in advance. The first shared terminal ID and the first password are transmitted in S101 when the determiner 25 determines that the first login authentication process is not set in S10-1 described above, namely the setting information indicates that the authentication process is not set.

The other one of the two types, a second type, includes a received shared terminal ID and a received password, which are a second shared terminal ID and a second password, received from the shared terminal management server 6 in S19 as described above. The second shared terminal ID and the second password are transmitted in S101 when the determiner 25 determines that the authentication process is set in S10-1 described above, namely the setting information indicates the authentication process is set, and the received shared terminal ID and the received password are transmitted from the shared terminal management server 6 after the first login authentication process. The first and second terminal IDs and the first and second passwords are data that have been read from the memory 2000 with the storing and reading processor 29 and transferred to the transmitter and receiver 21.

Next, the sorting and reading processor 79 of the communication management server 7 performs authentication for the shared terminal (electronic whiteboard 2x) by searching the authentication management table of FIG. 11 using the shared terminal ID and the password included in the second login request information received via the data transmitter and receiver 71 as search keys, and determining whether the same shared terminal ID and the same password are managed in the authentication management table of FIG. 11 (S102). When determining that the login request is received from the authenticated terminal, the storing and reading processor 79 that manages the same shared terminal ID and the same password, updates the operating state management table of FIG. 12, more specifically changes a field of the operating sate of a record of the shared terminal ID, which is received in S101 described above, to "ONLINE (COMMUNICATION AVAILABLE)" and stores date and time indicating when the login request information is received in S101 in a field of the receiving date and time (S103). Through this, the operating state, "ONLINE (COMMUNICATION AVAILABLE)", the receiving date and time, "4.10.2015.13:40", and the IP address, "1. 2. 1. 3", are stored in association with the terminal ID, "01aa", in the operating state management table as illustrated in FIG. 12. In some of the embodiments, the IP address of the shared terminal is transmitted from the electronic whiteboard 2x in S101 described above, instead of being registered in advance.

The transmitter and receiver 71 of the communication management server 7 transmits authentication result information indicating an authentication result obtained by the storing and reading processor 79 to the starting shared terminal (shared terminal 2x), which is a source of the above-mentioned login request through the communication network 100 (S104). In the following description of the present embodiment, a case in which the storing and reading processor 79 determines that the electronic whiteboard 2x is a terminal that has a legitimate use authority is described.

When receiving the authentication result indicating that the electronic whiteboard 2x is a terminal that has a legitimate use authority, the transmitter and receiver 21 of the starting shared terminal (electronic whiteboard 2x) transmits destination (contact) list request information that is a request for a destination list to the communication management server 7 (S105). The transmitter and receiver 71 of the communication management server 7, accordingly, receives the destination list request information.

Subsequently, the storing and reading processor 79 searches the destination list management table (FIG. 13) using the shared terminal ID "01aa" of the starting shared terminal (electronic whiteboard 2x), which is a source of the login request as a search key, to extract the terminal ID(s) of candidate counterpart shared terminal(s) that is(are) available to communicate with the starting shared terminal (electronic whiteboard 2x). Additionally, the storing and reading processor 79 reads out the destination name(s) associated with the extracted shared terminal ID(s) from the operating state management table (FIG. 12) (S106). In this example, each shared terminal ID and each corresponding destination name of the destination candidate, which is the counterpart shared terminal of the starting shared terminal (electronic whiteboard 2x) having the shared terminal ID "01aa" is extracted.

The storing and reading processor 79 of the communication management server 7 reads destination list frame data, and icon data reflecting the operating state of each candidate destination terminal, from the memory 7000 (S107). The data transmitter and receiver 71 further transmits "destination list information (destination list frame data, icon, shared terminal ID, and destination name), which includes the shared terminal ID and the destination name read with the storing reading processor 79 in addition to the destination list frame and the icon to the starting shared terminal (electronic whiteboard 2x) (S108). The starting shared terminal (electronic whiteboard 2x), which receives the destination list information at the transmitter and receiver 21, stores the received destination list information in the memory 2000 with the storing and reading processor 29 (S109).

As described above, in this embodiment, instead of managing the destination list information at each of the shared terminals, the communication management server 7 centrally manages the destination list information for all of the shared terminals. With this configuration of the communication system 1, even when another shared terminal is newly added to the communication system 1 or an existing shared terminal is replaced with a different type of shared terminal in the communication system 1, or even when the appearance of the destination list frame is changed, the communication management server 7 centrally reflects such changes without requiring each shared terminal to reflect such changes in the destination list information.

The storing and reading processor 79 of the communication management server 7 searches the operating state management table (FIG. 12) using the extracted terminal IDs of the candidate destination shared terminals, as search keys, to obtain the operating states of the shared terminals (S110).

Subsequently, the transmitter and receiver 71 of the communication management server 7 transmits to the starting shared terminal (electronic whiteboard 2x) each shared terminal ID used in S106 and being to be used as a search key, and the "operating state information of the shared terminals" including the operating state of each of the destination shared terminals (S111).

The storing and reading processor 79a of the starting shared terminal (electronic whiteboard 2x) sequentially stores the operating states, for each of the destination shared terminals, received from the communication management server 7, to the memory 2000 (S112). Based on the shared terminal state information received for each candidate counterpart terminal, the starting shared terminal (electronic whiteboard 2x) is able to obtain a current operating state of each candidate counterpart terminal (e.g., electronic whiteboard 2) that is available to communicate with the starting shared terminal (electronic whiteboard 2x).

Based on the destination list information and the terminal state information stored in the memory 2000, the display control 24 of the starting shared terminal (electronic whiteboard 2x) generates a destination (contact) list that reflects the current operating state of each candidate destination shared terminal. The display control 24 further displays the destination list as illustrated in FIG. 20 on the display 120 of FIG. 2 (S113). In FIG. 20, the icons each reflecting the operating state of the corresponding shared terminal are displayed at left. More specifically, the example of FIG. 20, the icons indicate the operating states of "ONLINE (COMMUNICATION AVAILABLE)", "OFFLINE", "ONLINE (COMMUNICATION AVAILABLE)", and "ONLINE (COMMUNICATING)", from the top to the bottom.

The storing and reading processor 79 of the communication management server 7 further searches the destination list management table of FIG. 13 using the shared terminal ID "01aa" of the starting shared terminal (electronic whiteboard 2x) which has sent the login request, as a search key, to extract the shared terminal ID of another starting shared terminal that registers the shared terminal ID "01aa" of the starting shared terminal (electronic whiteboard 2x) as a candidate destination shared terminal (S114). In the destination list management table illustrated in FIG. 13, the shared terminal IDs of other starting shared terminals that are extracted are "01ab", "01ba", and "01da".

Subsequently, the storing and reading processor 79 of the communication management server 7 searches the operating state management table (FIG. 12) using the shared terminal ID "01aa" of the starting shared terminal (electronic whiteboard 2x), which is the source of the login request, as a search key, and obtains the operating state of the starting shared terminal (electronic whiteboard 2x) (S115).

The transmitter and receiver 71 transmits "shared terminal state information" including the shared terminal ID "01aa" and the operating state "ONLINE (COMMUNICATION AVAILABLE)" of the starting shared terminal (electronic whiteboard 2x), obtained at S115, to each of the other shared terminals having the operating states of "ONLINE (COMMUNICATION AVAILABLE)" in the shared terminal management table (FIG. 12), among the shared terminals having the shared terminal IDs extracted at S114 (S116). When transmitting the operating state of the starting shared terminal (electronic whiteboard 2x) to each shared terminal, the transmitter and receiver 71 refers the operating state management table of FIG. 12 for each IP address, using each shared terminal ID. Accordingly, the shared terminal ID "01aa" and the operating state "ONLINE" of the starting shared terminal (electronic whiteboard 2x) which has sent the login request are transmitted to other counterpart terminals that are communicable with the starting shared terminal (electronic whiteboard 2x). The candidate counterpart terminal (such as the shared terminal 2y) displays the operating state of each one of the candidate counterpart terminals, as illustrated in FIG. 20 (S117).

### <Establishing Communication for Video Call>

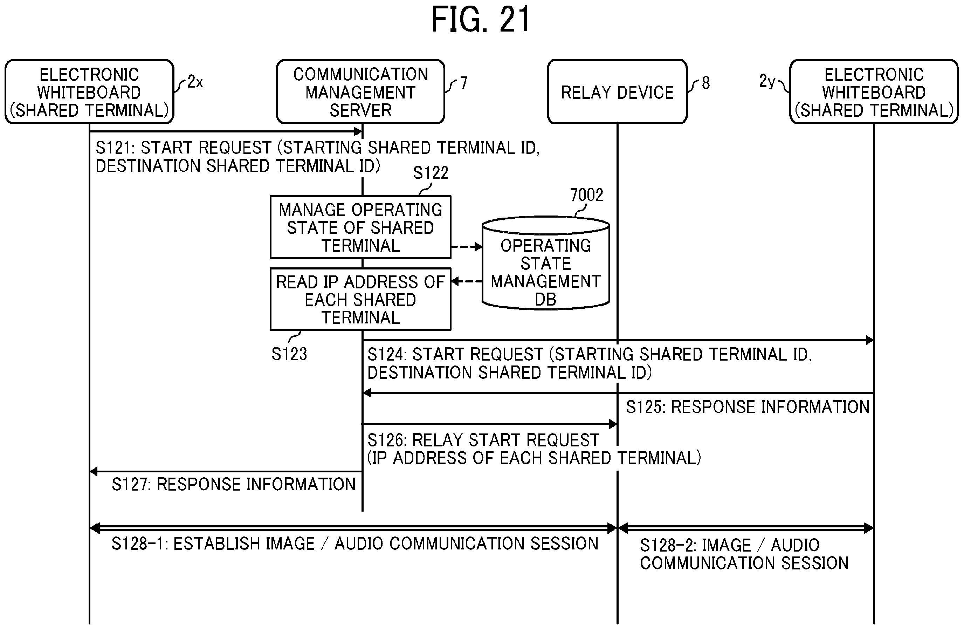

A communication establishing process for a video call is described with reference to FIG. 21. FIG. 21 is a sequence diagram illustrating a communication method (establishing a communication) for a video call.

Referring to FIG. 21, the starting shared terminal (electronic whiteboard 2x) starts a process for a video call (communication) by transmitting information to the communication management server 7. More specifically, the transmitter and receiver 21, which serves as a starting unit, of the electronic whiteboard 2x transmits the communication start request indicating communication start request information to the communication management server 7 (S121). The communication start request information includes the shared terminal ID of the starting shared terminal (electronic whiteboard 2x), "01aa", and the shared terminal ID of the counterpart shared terminal (electronic whiteboard 2y), "01da". The transmitter and receiver 71 of the communication management server 7, accordingly, receives the communication start request information.

On the basis of the shared terminal ID "01aa" of the starting shared terminal (electronic whiteboard 2x) and the shared terminal ID ("01da") of the destination shared terminal (electronic whiteboard 2y), which are included in the communication start request, the storing and reading processor 79 of the communication management server 7 changes the operating state field of each of records including the above-mentioned shared terminal IDs "01aa" and "01da" to "communicating" in the shared terminal management table (see FIG. 12) (S122). In this state, although the starting shared terminal (electronic whiteboard 2x) and the destination shared terminal (electronic whiteboard 2y) have not started communicating yet, but each of the shared terminal 2x and 2y enters a communicating state, and, if another shared terminal 2 tries to communicate with the starting shared terminal 2x or the destination shared terminal 2y, a notification sound or a display indicating that the each shared terminal is communicating is output.

Next, the storing and reading processor 79 of the communication management server 7 searches the operating state management table (see FIG. 12) using the terminal ID "01aa" of the starting shared terminal (electronic whiteboard 2x) and the shared terminal ID "01da" of the destination shared terminal 2y), received at S121, as search keys, to read corresponding IP addresses (S123).

The transmitter and receiver 71 of the communication management server 7 transmits the communication start request to the IP address, which is read at S123 (S124), of the destination shared terminal (electronic whiteboard 2y). The communication start request includes the terminal IDs "01aa" and "01da", as received at S121. The transmitter and receiver 21 of the destination shared terminal (electronic whiteboard 2y), accordingly, receives the communication start request.

The transmitter and receiver 21 of the destination shared terminal (electronic whiteboard 2y) transmits a response to the communication start request, to the communication management server 7 (S125). The transmitter and receiver 71 of the communication management server 7, accordingly, receives the response to the communication start request. The response to the communication start request indicates whether to accept the communication start request or not. A case of accepting the communication start request is described below.

The transmitter and receiver 71 of the communication management server 7 transmits a relay start request indicating a request for starting relaying to the relay device 8 (S126). The relay start request includes the IP addresses read at S123. The transmitter and receiver 31 of the relay device 8 receives the relay start request.

The transmitter and receiver 71 of the communication management server 7 transmits the response to the communication start request, which is received at S125, to the starting shared terminal (electronic whiteboard 2x) (S127). As described above, in this example, the transmitter and receiver 21 of the starting shared terminal (electronic whiteboard 2x) receives the response indicating the acceptance of the communication start request.

As described above, the starting shared terminal (electronic whiteboard 2x) and the destination shared terminal (electronic whiteboard 2y) establish an image data/audio data communication session via the relay device 8 (S128-1, 2) to start a videoconference.

As described above, according to the present embodiment, the communication terminal (shared terminal 2) has a first function and a second function. The first function is a function that is performed with a communication terminal (shared terminal), such as the electronic whiteboard 2x, without communicating with other communication terminal via a server or with control by the server through, for example, the Internet For example, the first function is any function that the communication terminal can perform when operating independently from other system. More specific examples of the first function include, but not limited to, a drawing function of drawing an image on the screen of the electronic whiteboard 2x with the electronic pen 2500 and/or the hand. Other specific examples of the function that can be performed independently are described, for example, referring to FIG. 8B. The second function is a function that is performed by communicating with other communication terminal via a server or with control by the server through, for example, the Internet. For example, the second function is any function that the communication can perform in cooperation with other system. More specific examples of the second function include, but not limited to, a video communication function of transmitting image data and audio data between a plurality of communication terminals via a communication network so that the plurality of communication terminals share the same image and sound. The video communication is defined as a communication of the image data and the audio data, however the second function is not limited to this, and includes, for example, a function of communicating the audio data without the image data, and any other content that may be transmitted or received to assist teleconference or videoconference.

As described above, according to the present embodiment, the communication terminal (shared terminal 2) that has the first function and the second function, performs login authentication of a user for each function of the first function and the second function. With this configuration, the communication terminal (shared terminal 2) according to the present embodiment maintains security as appropriate for each function. This allows a user to set the login authentication for the first function and the second function independently from each other, for example, in consideration of requirements or environments that may differ between the first function and the second function.

In one example, the first function enables the communication terminal to operate as an interactive whiteboard that processes drawing by a user, and the second function that enables the communication terminal to operate as a videoconferencing terminal or a teleconferencing terminal that processes video and/or audio data. When the communication terminal operates as the whiteboard, the communication terminal allows a user to log in with a simple process, for example, with a terminal privately possessed by the user. As the user is individually logged into the system, further processing that may be performed after drawing the image (such as storing the drawing image, transmitting the drawing image, or reading the drawing image) may be performed more smoothly. When the communication terminal operates as the videoconferencing terminal, the communication terminal itself logs into the system. This allows further processing, which is videoconferencing, to be performed more smoothly.

Further, in this embodiment, while login authentication is performed independently for each of the first function and the second function, such login authentication is automatically carried out by the communication terminal once authentication information to be used for the login process for the first function is received.

According to the present embodiment, to perform or not to perform the first login authentication to activate the first function as a whiteboard is selectively settable. When the first login authentication is required, the electronic whiteboard 2x transmits a privately-owned terminal ID that is obtained from the IC card 3 to the privately-owned terminal management server 5(one example of a first server) (see S13). When the first login authentication process succeeds in the privately-owned terminal management server 5, the electronic whiteboard 2x transmits to the privately-owned terminal management server 6 a request for a shared terminal ID and a password used for the second login authentication process performed with the communication management server 7 (see S17). Subsequently, the electronic whiteboard 2x transmits to the communication management server 7 a received shared terminal ID and a received password that are received from the shared terminal management server 6 (S101). Then, the communication management server 7 performs the second login authentication process (see S102). The received shared terminal ID is an example of received identification information, or received authentication information. With this configuration, when the communication terminal operates as the whiteboard, the user is able to further simplify the login process, as no login is required to use the standalone function of the communication terminal. Once the communication terminal operates as the videoconferencing terminal, the communication terminal logs into the system using authentication information, as required by the management server for videoconferencing. Accordingly, security required for performing videoconferencing is still maintained.

When the first login authentication is failed, the user is failed to use the first function as a whiteboard and the second function for a videoconference of the electronic whiteboard 2, because the user is failed to proceed to the second login authentication process, which is subsequent to the first login authentication process. When the first login authentication process is not required, the electronic whiteboard 2x transmits to the communication management server 7 a registered shared terminal ID and a registered password that are registered in the electronic whiteboard 2x in advance (see S101). Then, the communication management server 7 performs the second login authentication process (see S102). As described above, to perform the first login authentication process is selectively settable so that the user is able to perform the second login authentication process even when the first login authentication process is omitted. With this configuration in which the both of the drawing function (first function) and the videoconference function (second function) are useable, not requiring an equivalent login authentication for each function prevents a case where the both of the functions are unavailable.

Additionally, even when functions of the electronic whiteboard are expanded by adding the second function for a videoconference to the first function as a whiteboard, and the plurality of login authentication processes are settable to be performed, the user is able to set not to perform the first login process, resulting in flexibility in operating for the plurality of functions.

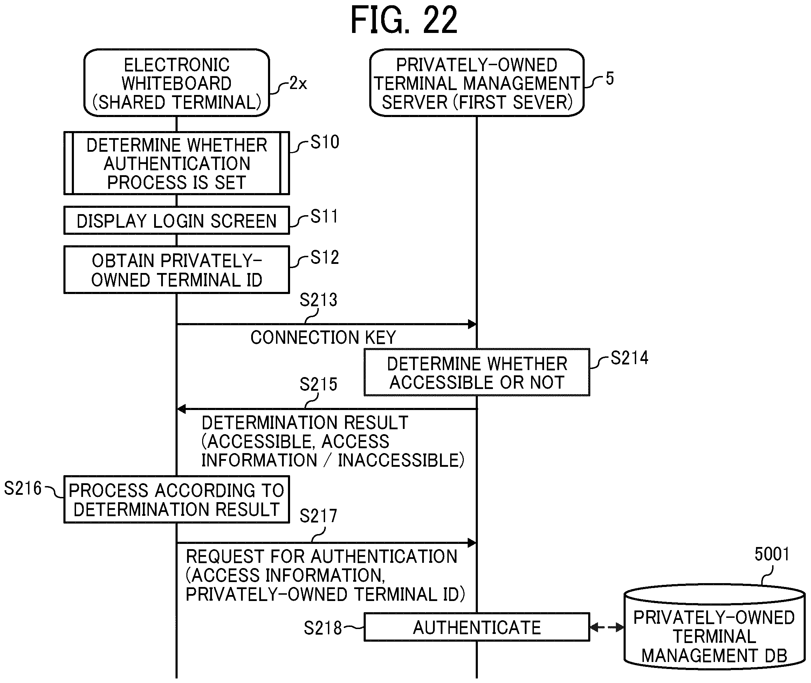

Referring to FIG. 22, a process or operation according to a second embodiment is described. FIG. 22 is a sequence diagram illustrating a communication process in relation to image data, according to the embodiment. In this embodiment, the processing of S13 and S14 of FIG. 14 according to the first embodiment is replaced with the processing of S213 to S217 of FIG. 22, such that the following describes the processing of S213 to S217. In one example, there may be a plurality of privately-owned terminal management servers 5.

When the obtainer and provider 28 of the electronic whiteboard 2x obtains the privately-owned terminal ID of the IC card 3 from the obtainer and provider 38 of the IC card 3 at S12 of FIG. 14, the transmitter and receiver 21 of the electronic whiteboard 2x transmits a connection key k1 to the privately-owned terminal management server 5 in FIG. 22 (S213). The privately-owned terminal management server 5 receives the connection key k1 at the transmitter and receiver 51. The connection key k1 is issued as a client of the privately-owned terminal management server 5 that possesses information for authentication, and stored in advance in the memory 2000 of the electronic whiteboard 2x.

On the other hand, a connection key k2 that is issued is stored in the memory 5000 of the privately-owned terminal management server 5. The determiner 55 of the privately-owned terminal management server 5 determines whether the received connection key k1 matches the stored connection key k2 to determine whether the access is allowed (S214). When the determiner 55 determines that the connection key k1 matches the connection key k2, the determiner 55 determines that the access is allowed. By contrast, when the determiner 55 determines that the connection key k1 does not match the connection key k2, the determiner 55 determines that the access is not allowed.

Next, the transmitter and receiver 51 of the privately-owned terminal management server 5 transmits a determination result to the electronic whiteboard 2x (S215). When the determiner 55 determines that the access is allowed, the determination result includes information indicating that the access is allowed and information a1. When the determiner 55 determines that the access is not allowed, the determination result includes information indicating that the access is not allowed. The electronic whiteboard 2x receives the determination result at the transmitter and receiver 21. The access information a1 is, for example, a unique random alphanumeric string of 16 characters, 32 characters, 64 characters or the like. The access information is information generated by the determiner 55 based on the determination by the determiner 55 that the access is allowed. The generated access information a1 is stored temporarily in the memory 5000 by the storing and reading processor 59.

Next, the electronic whiteboard 2x performs processing based on the determination result (S216). In one example, when the determination result includes information indicating that the access is not allowed, the display control 24 controls the display 220 to display a message indicating that the access is not allowed. By contrast, when the authentication result includes information indicating that the access is allowed, the process proceeds to S217. The following describes a case where the determination result includes the information indicating that the access is allowed.

The transmitter and receiver 21 of the electronic whiteboard 2x transmits an authentication request to the privately-owned terminal management server 5 (S217). The authentication request includes the terminal ID obtained at S12 and access information a2. The privately-owned terminal management server 5 receives the authentication request at the transmitter and receiver 51.

The authenticator 52 of the privately-owned terminal management server 5 authenticates the IC card 3 using the access information a2 and the terminal ID (S218). More specifically, the determiner 55 determines whether the received access information a2 matches the access information a1 that is temporarily stored in the memory 5000. When the determiner 55 determines that the access information a2 matches the access information a1, the authenticator 52 performs authentication in substantially the same manner as S14 described referring to FIG. 14. By contrast, when the determiner 55 determines that the received access information a2 does not match the access information a1 that is temporarily stored in the memory 5000, the authenticator 52 does not perform authentication. In this case, the transmitter and receiver 51 transmits, to the electronic whiteboard 2x, information indicating that the IC card 3 is not a legitimate IC card. Since operation after S218 is performed in substantially the same manner as described above referring to S14 and subsequent steps, description thereof is omitted.

In one example, the transmitter and receiver 51 may encrypt the access information a1 after S214, and transmits the encrypted access information a1 at S215.

As described above, in the second embodiment, the privately-owned terminal management server 5 is able to determine whether the electronic whiteboard 2x (shared terminal) is a licensed and legitimate terminal, in addition to authentication using the terminal ID. Thus, the second embodiment further enables to provide a communication system whose security is improved.

Further, according to the second embodiment, in a case in which there are the plurality of privately-owned terminal management servers 5, when the electronic whiteboard 2x sends an authentication request to one of the terminal management servers 5 that does not generate the access information at S214, the electronic whiteboard 2x receives a response indicating that access is not allowed. Accordingly, the second embodiment enables to improve legitimacy by authentication.

Although the embodiments of the disclosure have been described and illustrated above, such description is not intended to limit the disclosure to the illustrated embodiments. Numerous additional modifications and variations are possible in light of the above teachings. It is therefore to be understood that within the scope of the appended claims, the embodiments may be practiced otherwise than as specifically described herein. For example, elements and/or features of different illustrative embodiments may be combined with each other and/or substituted for each other within the scope of this disclosure and appended claims.

Although the user ID and the user name received S15 are described as examples of the received identification information in the above-described embodiment, the received identification information is not limited to these. For example, as another example of the received identification information, an email address of the user may be used. When the email address is used, the privately-owned terminal management server 5 manages the privately-owned terminal management DB 5001 (see FIG. 10A) in a manner that each email address is associated with a corresponding privately-owned terminal ID.

Additionally, the privately-owned terminal management server 5 and the shared terminal management server 6 may be implemented by a single server. In such case, the privately-owned terminal management DB 5001 and the destination management DB 6001 may be combined. With this DB, in response to reception of the privately-owned terminal ID, the server may obtain the terminal ID of the communication terminal to be transmitted to the communication management server 7.

First authentication information includes privately-owned terminal identification information. Second authentication information includes registered authentication information and received authentication information. The registered authentication information includes the registered identification information and the registered password described above. The received authentication information includes the received identification information and the received password described above.

The present disclosure may be implemented in any convenient form, for example using dedicated hardware, or a mixture of dedicated hardware and software. The present disclosure may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present disclosure can be implemented as software, each and every aspect of the present disclosure thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. A communication terminal (2), comprising:
a processor (201) configured to control the communication terminal to perform a first function and a second function, the first function being performed without requiring communication with other communication terminal, and the second function being performed through communication with the other communication terminal,
the processor (201) being configured to:
control to transmit first authentication information to a first server to request for the first function, the first server being configured to perform a first authentication process of determining whether the communication terminal is allowed to perform the first function based on the first authentication information,
**characterized in that**
in response to a result of the first authentication process indicating that the communication terminal is allowed to perform the first function, the processor (201) is configured to control to transmit second authentication information to a second server to request for the second function, the second server being configured to perform a second authentication process of determining whether the communication terminal is allowed to perform the second function based on the second authentication information, wherein the processor (201) is further configured to receive the second authentication information from a third server that transmits the second authentication information based on the result of the first authentication process indicating that the communication terminal is allowed, the result of the first authentication process including user identification information that is included in a request for the second authentication information transmitted by the communication terminal (2) to the third server.

2. The communication terminal (2) of claim 1,
wherein, in response to a result of the second authentication process indicating that the communication terminal (2) is allowed to perform the second function, the processor (201) further transmits a request for counterpart information regarding one or more communication counterparts for the communication terminal each capable of performing communication with the communication terminal when the second function is allowed.

3. The communication terminal (2) of claim 1, wherein the first function includes a function of drawing an image and the second function includes a function of carrying out a videoconference.

4. The communication terminal (2) of claim 1, wherein the first function includes a function that the communication terminal performs independently, and the second function includes a function that the communication terminal performs in cooperation with the other communication terminal that establishes a communication session with the communication terminal.

5. The communication terminal (2) of claim 1,
wherein the first authentication information includes an identifier identifying at least one of a privately-owned terminal operated by a user and the user operating the privately-owned terminal, the user being one of a plurality of users who shares the use of the communication terminal, and
the processor (201) receives the first authentication information from the privately-owned terminal.

6. The communication terminal (2) of claim 5, wherein the second authentication information includes at least one of a user identifier identifying the user operating the communication terminal (2), a terminal identifier identifying the communication terminal, and an email address of the user.

7. A communication system (1) comprising:
the communication terminal (2) of claim 1;
the first server (5) including a memory configured to store an identifier identifying a privately-owned terminal operated by a user, in association with an identifier identifying the user; and
the second server (7) including a memory configured to store the identifier identifying the user, in association with an identifier identifying the communication terminal.

8. A method for controlling a communication terminal (2) to perform a first function and a second function, the first function being performed without requiring communication with other communication terminal, and the second function being performed through communication with the other communication terminal, the method comprising:
transmitting (S13, S213) first authentication information to a first server to request for the first function,
receiving (S15), from the first server, a result of a first authentication process of determining whether the communication terminal is allowed to perform the first function based on the first authentication information: **characterized by** in response to a result of the first authentication process indicating that the communication terminal is allowed to perform the first function,
receiving (S17) from a second server, a result of a second authentication process of determining whether the communication terminal is allowed to perform the second function based on the second authentication information; and
performing the first function and the second function with the communication terminal,
receiving the second authentication information from a third server that transmits the second authentication information based on the result of the first authentication process indicating that the communication terminal is allowed, the result of the first authentication process including user identification information that is included in a request for the second authentication information transmitted by the communication terminal (2) to the third server.

9. The method of claim 8, further comprising:
displaying (S113), on a display, counterpart information regarding one or more communication counterparts each capable of performing communication with the communication terminal to perform the second function.

10. The method of claim 9, further comprising:
receiving the first authentication information from a privately-owned terminal operated by a user, the user being one of a plurality of users who shares use of the communication terminal,
wherein the step of transmitting through the step of performing is performed automatically at the communication terminal in response to reception of the first authentication information.

11. A carrier means carrying a computer readable code for controlling a computer to carry out the method of any one of claims 8 to 10.

## Patentansprüche

1. Kommunikationsendgerät (2), umfassend:
einen Prozessor (201), der konfiguriert ist, um das Kommunikationsendgerät dahingehend zu steuern, dass es eine erste Funktion und eine zweite Funktion ausführt, wobei die erste Funktion ausgeführt wird, ohne dass eine Kommunikation mit einem anderen Kommunikationsendgerät erforderlich ist und die zweite Funktion durch eine Kommunikation mit dem anderen Kommunikationsendgerät ausgeführt wird,
wobei der Prozessor (201) zu Folgendem konfiguriert ist:
Steuern, um erste Authentifizierungsinformationen an einen ersten Server zu übertragen, um die erste Funktion anzufordern, wobei der erste Server konfiguriert ist, um einen ersten Authentifizierungsprozess auszuführen zum Bestimmen davon, ob es dem Kommunikationsendgerät gestattet ist, die erste Funktion auszuführen, basierend auf den ersten Authentifizierungsinformationen,
**dadurch gekennzeichnet, dass**
als Reaktion auf ein Ergebnis des ersten Authentifizierungsprozesses, das angibt, dass es dem Kommunikationsendgerät gestattet ist, die erste Funktion auszuführen, der Prozessor (201) konfiguriert ist, um zu steuern, um zweite Authentifizierungsinformationen an einen zweiten Server zu übertragen, um die zweite Funktion anzufordern, wobei der zweite Server konfiguriert ist, um einen zweiten Authentifizierungsprozess auszuführen zum Bestimmen davon, ob es dem Kommunikationsendgerät gestattet ist, die zweite Funktion auszuführen, basierend auf den zweiten Authentifizierungsinformationen, wobei der Prozessor (201) ferner konfiguriert ist, um die zweiten Authentifizierungsinformationen von einem dritten Server zu empfangen, der die zweiten Authentifizierungsinformationen überträgt, basierend auf dem Ergebnis des ersten Authentifizierungsprozesses, das angibt, dass es dem Kommunikationsendgerät gestattet ist, wobei das Ergebnis des ersten Authentifizierungsprozesses Benutzeridentifikationsinformationen umfasst, die in einer Anfrage für die zweiten Authentifizierungsinformationen enthalten sind, die durch das Kommunikationsendgerät (2) an den dritten Server übertragen wird.

2. Kommunikationsendgerät (2) nach Anspruch 1,
wobei als Reaktion auf ein Ergebnis des zweiten Authentifizierungsprozesses, das angibt, dass es dem Kommunikationsendgerät (2) gestattet ist, die zweite Funktion auszuführen, der Prozessor (201) ferner eine Anfrage für Gegeninformationen in Bezug auf ein oder mehr Kommunikationsgegenstücke für das Kommunikationsendgerät überträgt, von denen jedes in der Lage ist, eine Kommunikation mit dem Kommunikationsendgerät auszuführen, wenn die zweite Funktion gestattet ist.

3. Kommunikationsendgerät (2) nach Anspruch 1, wobei die erste Funktion eine Funktion zum Zeichnen eines Bildes umfasst und die zweite Funktion eine Funktion zum Ausführen einer Videokonferenz umfasst.

4. Kommunikationsendgerät (2) nach Anspruch 1, wobei die erste Funktion eine Funktion umfasst, die das Kommunikationsendgerät unabhängig ausführt und die zweite Funktion eine Funktion umfasst, die das Kommunikationsendgerät in Zusammenarbeit mit dem anderen Kommunikationsendgerät ausführt, das eine Verbindungssitzung mit dem Kommunikationsendgerät einrichtet.

5. Kommunikationsendgerät (2) nach Anspruch 1,
wobei die ersten Authentifizierungsinformationen einen Identifikator umfassen, der mindestens eines von einem Endgerät in Privatbesitz, das von einem Benutzer bedient wird und dem Benutzer, der das Endgerät in Privatbesitz bedient, identifiziert, wobei der Benutzer einer von einer Vielzahl von Benutzern ist, die sich die Benutzung des Kommunikationsendgeräts teilen, und
der Prozessor (201) die ersten Authentifizierungsinformationen von dem Endgerät in Privatbesitz empfängt.

6. Kommunikationsendgerät (2) nach Anspruch 5, wobei die zweiten Authentifizierungsinformationen mindestens eines von einem Benutzeridentifikator, der den Benutzer identifiziert, der das Kommunikationsendgerät (2) bedient, einem Endgerätidentifikator, der das Kommunikationsendgerät identifiziert, und einer E-Mail-Adresse des Benutzers umfassen.

7. Kommunikationssystem (1), umfassend:
das Kommunikationsendgerät (2) nach Anspruch 1;
den ersten Server (5) einschließlich eines Speichers, der konfiguriert ist, um einen Identifikator zu speichern, der ein Endgerät in Privatbesitz identifiziert, das von einem Benutzer bedient wird, in Verbindung mit einem Identifikator, der den Benutzer identifiziert; und
den zweiten Server (7) einschließlich eines Speichers, der konfiguriert ist, um den Identifikator zu speichern, der den Benutzer identifiziert in Verbindung mit einem Identifikator, der das Kommunikationsendgerät identifiziert.

8. Verfahren zum Steuern eines Kommunikationsendgeräts (2), um eine erste Funktion und eine zweite Funktion auszuführen, wobei die erste Funktion ausgeführt wird, ohne eine Kommunikation mit einem anderen Kommunikationsendgerät zu erfordern und die zweite Funktion durch eine Kommunikation mit dem anderen Kommunikationsendgerät ausgeführt wird, das Verfahren umfassend:
Übertragen (S13, S213) erster Authentifizierungsinformationen an einen ersten Server, um die erste Funktion anzufordern,
Empfangen (S15), von dem ersten Server, eines Ergebnisses eines ersten Authentifizierungsprozesses zum Bestimmen davon, ob es dem Kommunikationsendgerät gestattet ist, die erste Funktion auszuführen, basierend auf den ersten Authentifizierungsinformationen;
**gekennzeichnet durch**,
als Reaktion auf ein Ergebnis des ersten Authentifizierungsprozesses, das angibt, dass es dem Kommunikationsendgerät gestattet ist, die erste Funktion auszuführen,
Empfangen (S17), von einem zweiten Server, eines Ergebnisses eines zweiten Authentifizierungsprozesses zum Bestimmen davon, ob es dem Kommunikationsendgerät gestattet ist, die zweite Funktion auszuführen, basierend auf den zweiten Authentifizierungsinformationen; und
Ausführen der ersten Funktion und der zweiten Funktion mit dem Kommunikationsendgerät,
Empfangen der zweiten Authentifizierungsinformationen von einem dritten Server, der die zweiten Authentifizierungsinformationen überträgt, basierend auf dem Ergebnis des ersten Authentifizierungsprozesses, das angibt, dass es dem Kommunikationsendgerät gestattet ist, wobei das Ergebnis des ersten Authentifizierungsprozesses Benutzeridentifikationsinformationen umfasst, die in einer Anfrage für die zweiten Authentifizierungsinformationen enthalten sind, die von dem Kommunikationsendgerät (2) an den dritten Server übertragen wird.

9. Verfahren nach Anspruch 8, ferner umfassend:
Anzeigen (S113) auf einer Anzeige von Gegeninformationen in Bezug auf ein oder mehr Kommunikationsgegenstücke, von denen jedes in der Lage ist, eine Kommunikation mit dem Kommunikationsendgerät auszuführen, um die zweite Funktion auszuführen.

10. Verfahren nach Anspruch 9, ferner umfassend:
Empfangen der ersten Authentifizierungsinformationen von einem Endgerät in Privatbesitz, das von einem Benutzer bedient wird, wobei der Benutzer einer von einer Vielzahl von Benutzern ist, die sich eine Benutzung des Kommunikationsendgeräts teilen,
wobei der Schritt zum Übertragen durch den Schritt zum Ausführen automatisch an dem Kommunikationsendgerät ausgeführt wird als Reaktion auf einen Empfang der ersten Authentifizierungsinformationen.

11. Träger zum Tragen eines computerlesbaren Codes zum Steuern eines Computers, um das Verfahren nach einem der Ansprüche 8 bis 10 auszuführen.

## Revendications

1. Terminal de communication (2), comprenant :
un processeur (201) configuré pour commander le terminal de communication pour réaliser une première fonction et une deuxième fonction, la première fonction étant réalisée sans nécessiter de communication avec un autre terminal de communication, et la deuxième fonction étant réalisée par le biais d'une communication avec l'autre terminal de communication,
le processeur (201) étant configuré pour :
commander la transmission de premières informations d'authentification à un premier serveur pour demander la première fonction, le premier serveur étant configuré pour réaliser un premier processus d'authentification consistant à déterminer si le terminal de communication est autorisé à réaliser la première fonction sur la base des premières informations d'authentification,
**caractérisée en ce que**
en réponse à un résultat du premier processus d'authentification selon lequel le terminal de communication est autorisé à réaliser la première fonction, le processeur (201) est configuré pour commander la transmission de deuxièmes informations d'authentification à un deuxième serveur pour demander la deuxième fonction, le deuxième serveur étant configuré pour réaliser un deuxième processus d'authentification consistant à déterminer si le terminal de communication est autorisé à réaliser la deuxième fonction sur la base des deuxièmes informations d'authentification, le processeur (201) étant en outre configuré pour recevoir les deuxièmes informations d'authentification depuis un troisième serveur qui transmet les deuxièmes informations d'authentification sur la base du résultat du premier processus d'authentification indiquant que le terminal de communication est autorisé, le résultat du premier processus d'authentification comprenant des informations d'identification d'utilisateur qui sont incluses dans une demande des deuxièmes informations d'authentification transmise par le terminal de communication (2) au troisième serveur.

2. Terminal de communication (2) de la revendication 1,
dans lequel, en réponse à un résultat du deuxième processus d'identification indiquant que le terminal de communication (2) est autorisé à réaliser la deuxième fonction, le processeur (201) transmet en outre une demande d'informations d'homologue concernant au moins un homologue de communication pour le terminal de communication, chacun capable de réaliser une communication avec le terminal de communication lorsque la deuxième fonction est autorisée.

3. Terminal de communication (2) de la revendication 1, dans lequel la première fonction comprend une fonction consistant à dessiner une image et la deuxième fonction comprend une fonction consistant à réaliser une vidéoconférence.

4. Terminal de communication (2) de la revendication 1, dans lequel la première fonction comprend une fonction que le terminal de communication réaliser indépendamment, et la deuxième fonction comprend une fonction que le terminal de communication réalise en coopération avec l'autre terminal de communication qui établit une session de communication avec le terminal de communication.

5. Terminal de communication (2) de la revendication 1,
dans lequel les première informations d'authentification comprennent un identifiant qui identifie au moins l'un d'un terminal privé utilisé par un utilisateur et de l'utilisateur utilisant le terminal privé, l'utilisateur étant l'un d'une pluralité d'utilisateurs qui partagent l'utilisation du terminal de communication, et
le processeur (201) reçoit les premières informations d'authentification depuis le terminal privé.

6. Terminal de communication (2) de la revendication 5, dans lequel les deuxièmes informations d'authentification comprennent au moins l'un d'un identifiant d'utilisateur qui identifie l'utilisateur utilisant le terminal de communication (2), d'un identifiant de terminal qui identifie le terminal de communication, et d'une adresse de courrier électronique de l'utilisateur.

7. Système de communication (1) comprenant :
le terminal de communication (2) de la revendication 1 ;
le premier serveur (5) comprenant une mémoire configurée pour stocker un identifiant qui identifie un terminal privé utilisé par un utilisateur, en association avec un identifiant qui identifie l'utilisateur ; et
le deuxième serveur (7) comprenant une mémoire configurée pour stocker un identifiant qui identifie l'utilisateur, en association avec un identifiant qui identifie le terminal de communication.

8. Procédé permettant de commander un terminal de communication (2) pour réaliser une première fonction et une deuxième fonction, la première fonction étant réalisée sans nécessiter de communication avec un autre terminal de communication, et la deuxième fonction étant réalisée par le biais d'une communication avec l'autre terminal de communication, le procédé comprenant :
la transmission (S13, S213) de premières informations d'authentification à un premier serveur pour demander la première fonction,
la réception (S15), depuis le premier serveur, d'un résultat d'un premier processus d'authentification consistant à déterminer si le terminal de communication est autorisé à réaliser la première fonction sur la base des premières informations d'authentification,
**caractérisé par**
en réponse à un résultat du premier processus d'authentification indiquant que le terminal de communication est autorisé à réaliser la première fonction,
la réception (S 17), depuis un deuxième serveur, d'un résultat d'un deuxième processus d'authentification consistant à déterminer si le terminal de communication est autorisé à réaliser la deuxième fonction sur la base des deuxièmes informations d'authentification ; et
la réalisation de la première fonction et de la deuxième fonction avec le terminal de communication,
la réception des deuxièmes informations d'authentification depuis un troisième serveur qui transmet les deuxièmes informations d'authentification sur la base du résultat du premier processus d'authentification indiquant que le terminal de communication est autorisé, le résultat du premier processus d'authentification comprenant des informations d'identification d'utilisateur qui sont incluses dans une demande des deuxièmes informations d'authentification transmise par le terminal de communication (2) au troisième serveur.

9. Procédé de la revendication 8, comprenant en outre :
l'affichage (S113), sur un affichage, d'informations d'homologue concernant au moins un homologue de communication, chacun capable de réaliser une communication avec le terminal de communication pour réaliser la deuxième fonction.

10. Procédé de la revendication 9, comprenant en outre :
la réception de premières informations d'authentification depuis un terminal privé utilisé par un utilisateur, l'utilisateur étant l'un d'une pluralité d'utilisateurs qui partagent l'utilisation du terminal de communication,
l'étape de transmission par le biais de l'étape de réalisation étant réaliser automatiquement au niveau du terminal de communication en réponse à la réception des premières informations d'authentification.

11. Moyen de support porteur d'un code lisible par ordinateur destiné à commander un ordinateur pour réaliser le procédé de l'une quelconque des revendications 8 à 10.
